(19)

(11) **EP 4 560 532 B1**

(12) **EUROPEAN PATENT SPECIFICATION**

(45) Date of publication and mention of the grant of the patent:
**08.04.2026 Bulletin 2026/15**

(21) Application number: **24172811.2**

(22) Date of filing: **26.04.2024**

(51) International Patent Classification (IPC):
***G06N 3/044*** *(2023.01)* ***G06N 3/045*** *(2023.01)*
***H04W 8/00*** *(2009.01)* ***H04W 28/00*** *(2009.01)*

(52) Cooperative Patent Classification (CPC):
**G06N 3/045; G06N 3/044; G06N 3/08; G06N 3/084; H04L 41/16; H04W 4/02;** H04W 4/70

(54) **A METHOD AND SYSTEM FOR TRAINING A NEURAL NETWORK TO FORECAST MULTIVARIATE DATA**

VERFAHREN UND SYSTEM ZUM TRAINIEREN EINES NEURONALEN NETZWERKS ZUR VORHERSAGE MULTIVARIATER DATEN

PROCÉDÉ ET SYSTÈME D’APPRENTISSAGE D’UN RÉSEAU NEURONAL POUR PRÉVOIR DES DONNÉES À VARIABLES MULTIPLES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **23.11.2023 IN 202311079656**

(43) Date of publication of application:
**28.05.2025 Bulletin 2025/22**

(73) Proprietor: **FUJITSU LIMITED**
**Kawasaki-shi, Kanagawa 211-8588 (JP)**

(72) Inventors:
- **KURIAN, Nikhil Cherian**
  **560037 Bangalore (IN)**
- **KUMAR, Niraj**
  **560037 Bangalore (IN)**

(74) Representative: **Haseltine Lake Kempner LLP**
**Cheapside House**
**138 Cheapside**
**London EC2V 6BJ (GB)**

(56) References cited:
**US-A1- 2021 326 723**

- **ZHONG WEIDA ET AL: "Heterogeneous Spatio-Temporal Graph Convolution Network for Traffic Forecasting with Missing Values", 2021 IEEE 41ST INTERNATIONAL CONFERENCE ON DISTRIBUTED COMPUTING SYSTEMS (ICDCS), IEEE, 7 July 2021 (2021-07-07), pages 707 - 717, XP033982507, DOI: 10.1109/ ICDCS51616.2021.00073**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 560 532 B1

## Description

### Field of the invention

The present invention relates to a computer-implemented method for training a neural network to forecast multivariate data in a forecast location in a network and further relates to a computer-implemented method for forecasting multivariate data in a forecast location in a network.

### Background of the Invention

The rise of smart devices and Internet of Things (IoT) applications has resulted in a significant increase in mobile data traffic. To meet the growing demands and enhance user experience, cellular networks require infrastructure upgrades. The advent of 5G technology addresses these needs by offering high-speed data transfer with low latency. With the expansion of the 5G network, optimizing the utilization of network resources has become increasingly important. Accurately predicting network traffic and performance is vital for improving the efficiency of network operators, service providers, and equipment manufacturers. However, forecasting network demand is challenging due to its non-stationary characteristics influenced by multiple factors or variables such as user mobility patterns, weather, and social events.

In general, forecasting of multivariate (i.e. multiple variable) data in a computer or telecommunications network can also be complicated by missing data from a time series sequence of data, when one or more, or even all of the values for variables are missing at some time points in the time series.

It is therefore desirable to improve the accuracy of forecasting multivariate data using neural networks. It is also desirable to enhance the accuracy of time series forecasting models when faced with data insufficiency caused by irregular, missing records, without relying on data imputation techniques.

US 2021/326723 A1 discloses that a computing system configured to execute a predictive program is provided. The predictive program, in a run-time phase, receives a current value for a remotely sourced forecast as run-time input into an artificial intelligence model. The artificial intelligence model has been trained on training data including a time series of locally sourced measurements for a parameter and a time series of remotely sourced forecast data for the parameter.

The predictive program outputs a predicted forecast offset between the current value of a remotely sourced forecast and a future locally sourced measurement for the parameter. The predictive program outputs from the artificial intelligence model a predicted forecast offset based on the run-time input.

### Summary of the Invention

The invention is defined in the independent claims, to which reference should now be made. Further features are set out in the dependent claims.

According to an aspect of the invention there is provided a computer-implemented method for training a neural network to forecast multivariate data in a forecast location in a network. The method comprises inputting a dataset from the forecast location and one or more adjacent locations, the dataset comprising spatio-temporal characteristics of each location and multivariate data recorded at each location, determining a longest time-series sequence length of the dataset for which an occurrence frequency of the longest time-series sequence length appearing in the dataset is higher than a threshold number of the dataset, a time-series sequence length indicating a total length of consecutive time steps with complete data in the dataset, training a forecast location neural network based on the determined longest time series sequence length to encode the multivariate data from the forecast location into a forecast location vector, training for each of the one or more adjacent locations an adjacent location neural network based on the determined longest time series sequence length to encode the multivariate data from each of the one or more adjacent locations each into an adjacent location vector, combining the one or more adjacent location vectors into a combined adjacent location vector, composing the forecast location vector and combined adjacent location vector into a final combined vector, and decoding the final combined vector to generate a forecast from the dataset for the forecast location.

The method may further comprise determining one or more shorter time-series sequence lengths of the dataset with respect to the longest time-series sequence length, repeating, for the one or more shorter time-series lengths, the steps of training the forecast location neural network and the one or more adjacent location neural networks, combining into a combined adjacent location vector, composing into a final combined vector, decoding to generate a forecast; and once the neural networks are trained, determining an ensemble of the generated forecasts for each of the longest time-series sequence length and the one or more shorter time-series lengths, to generate a final forecast for the forecast location.

The network, that is the network for which the neural network is trained, may comprise a plurality of adjacent locations. The combining one or more adjacent location vectors into a combined adjacent location vector method step may comprise concatenating the adjacent location vectors into a concatenated location vector, and inputting the concatenated location vector into a sequence of two multilayer perceptron layers, the output of a first multilayer perceptron layer being input into a second multilayer perceptron layer.

The composing step, that is composing the forecast location vector and combined adjacent location vector it the final combined vector may comprise concatenating the forecast location vector and combined adjacent location vectors into a final latent vector.

The composing step may further comprise inputting the final latent vector into a self-attention mechanism and determining as an output the final combined vector. The self-attention mechanism or module or model, may take a vector (or tensor) as an input and output a vector (or tensor).

The decoding step of the method, that is decoding the final combined vector to generate a forecast from the dataset for the forecast location may comprise training an output neural network based on the determined time series sequence length to encode the final combined vector; and inputting hidden layers of the trained output neural network into a time distributed dense layer to generate an output, wherein the output from the time distributed dense layer is the forecast. The output neural network may be a long short-term memory (LSTM) neural network. The LSTM neural network may be a bi-directional LSTM neural network.

The final combined vector may be replicated using a repeat vector unit or module or mechanism and each replicated final combined vector may be decoded to generate a forecast at a different time point.

Each output (each replicated final combined vector) from the repeat vector unit may be input into a self-attention mechanism. The output from the self-attention mechanism may be input into a neural network (for example a bi-directional LSTM neural network) and each hidden layer of the Bi-LSTM may be input into a Time distributed wrapper to generate a forecast at a different time point. Each output from the repeat vector may be used to generate a consecutive time step forecast. A first output from the repeat vector may be used to generate a forecast one time step ahead of the input data. A second output from the repeat vector may be used to generate a forecast two time steps ahead of the input data.

The longest time-series sequence length of the dataset may be determined using a longest common continuous frequent sequences algorithm, LCCFS. The LCCFS algorithm may comprise determining a number of data records in the dataset with complete data, a data record comprising for example multivariate data recorded at each location at each time step in the dataset, the number of data records may comprise all data records with complete data, setting the threshold number from the complete data in the dataset, wherein the threshold number is preferably set as 50% of the complete data in the dataset, determining length and occurrence frequency for each continuous common sequence in the multivariate data, the length being a number of complete consecutive multivariate data in the dataset and the occurrence frequency being a number of times the continuous common sequence occurs in the dataset and setting the continuous common sequence in the multivariate data with an occurrence frequency above the threshold value as the longest time-series sequence length.

The forecast neural network may be a Bidirectional long short term memory, BiLSTM, neural network.

Each of the adjacent location neural network(s) may be Bidirectional long short term memory, BiLSTM, neural networks.

The output neural network may be a Bidirectional long short term memory, BiLSTM, neural network.

According to another aspect of the present invention there is provided a computer program which, when run on a computer, causes the computer to carry out a method for training a neural network to forecast multivariate data in a forecast location in a network. The method comprises inputting a dataset from the forecast location and one or more adjacent locations, the dataset comprising spatio-temporal characteristics of each location and multivariate data recorded at each location, determining a longest time-series sequence length of the dataset for which an occurrence frequency of the longest time-series sequence length appearing in the dataset is higher than a threshold number of the dataset, a time-series sequence length indicating a total length of consecutive time steps with complete data in the dataset,, training a forecast location neural network based on the determined longest time series sequence length to encode the multivariate data from the forecast location into a forecast location vector, training for each of the one or more adjacent locations an adjacent location neural network based on the determined longest time series sequence length to encode the multivariate data from each of the one or more adjacent locations each into an adjacent location vector, combining the one or more adjacent location vectors into a combined adjacent location vector, composing the forecast location vector and combined adjacent location vector into a final combined vector, and decoding the final combined vector to generate a forecast from the dataset for the forecast location.

According to yet another aspect of the present invention there is provided an information processing apparatus for training a neural network to forecast multivariate data in a forecast location in a network comprising a memory and a processor connected to the memory. The processor is configured to input a dataset from the forecast location and one or more adjacent locations, the dataset comprising spatio-temporal characteristics of each location and multivariate data recorded at each location, determine a longest time-series sequence length of the dataset for which an occurrence frequency of the longest time-series sequence length appearing in the dataset is higher than a threshold number of the dataset, a time-series sequence length indicating a total length of consecutive time steps with complete data in the dataset,, train a forecast location neural network based on the determined longest time series sequence length to encode the multivariate data from the forecast location into a forecast location vector, train for each of the one or more adjacent locations an adjacent location neural network based on the determined longest time series sequence length to encode the multivariate data from each of the one or more adjacent locations each into an adjacent location vector, combine the one or more adjacent location vectors into a combined adjacent location vector, compose the forecast location vector and combined adjacent location vector into a final combined vector, and decode the final combined vector to generate a forecast from the dataset for the forecast location.

According to yet another aspect of the present invention there is provided a computer-implemented method for forecasting multivariate data in a forecast location in a network. The computer-implemented method comprising inputting a dataset from the forecast location and one or more adjacent locations, the dataset comprising spatio-temporal characteristics of each location and multivariate data recorded at each location, providing a longest time-series sequence length of the dataset for which an occurrence frequency of the longest time-series sequence length appearing in the dataset is higher than a threshold number of the dataset, a time-series sequence length indicating a total length of consecutive time steps with complete data in the dataset, using a pretrained forecast location neural network based on the longest time series sequence length to encode the multivariate data from the forecast location into a forecast location vector, using for each of the one or more adjacent locations a pretrained adjacent location neural network based on the longest time series sequence length to encode the multivariate data from each of the one or more adjacent locations each into an adjacent location vector, combining the one or more adjacent location vectors into a combined adjacent location vector, composing the forecast location vector and combined adjacent location vector into a final combined vector, decoding the final combined vector to generate a forecast from the dataset for the forecast location.

The dataset may be input by a user entry on a graphical user interface (GUI). For example, a user may set a forecast date and/or a forecast time. A user may additionally or alternatively set a forecast feature. The forecast features may include one or more of internet usage, calls in, calls out, sms in and sms out. The dataset may be stored in a computer memory and retrieved for use in the forecast if specified by the user input. For example, the user may submit the selected forecast date and/or forecast time, and forecast features using the GUI and the dataset may be retrieved from a computer memory. The GUI may present the user with an option to input a dataset.

The longest time-series sequence length of the dataset may be provided by user entry on a graphical user interface GUI. For example, the user may submit forecast criteria, such as forecast date, forecast time and/or forecast features, into the GUI. The longest time-series sequence length may be stored in, for example, a computer memory and the user input may prompt the retrieval of the longest time-series sequence length. The user may provide the longest time-series sequence length of the dataset through entry into the GUI. That is, the user may enter the longest time-series sequence length into a text box of the GUI or may select the longest time-series sequence from a drop-down menu in the GUI.

The generated forecast may be output on a graphical user interface (GUI). For example, a user may submit forecast criteria and the GUI may generate, for example, a forecast map of the network. For example, the forecast map may show a forecast of the forecast location. The forecast map may be notionally gridded such that each grid point shows a different forecast location. Each grid point may be made up of a pixel of the forecast location.

The forecast dataset is data from a telecommunications network such as a 5G network. Each grid or pixel, in the forecast map may show a forecast for a base station or node or gNodeB (gNb).

The forecast data may be used to activate network resources. For example, depending on the result of the forecast data, more or fewer network resources may be automatically made available. For example, the forecast data may show high network demand and hence more base stations may be made available to handle the extra load. The opposite case may also be true. That is, the forecast may show a predicted reduction in network usage and hence base stations made be taken offline. Of course, other network resources may be controlled as a result of the forecast. The activation/deactivation of the network resources may be automatic.

Embodiments of another aspect include a computer program which, when executed by a teleconference device, causes the teleconference device to execute a method of an embodiment. The computer program may be stored on a computer-readable medium. The computer-readable medium may be non-transitory.

Embodiments of another aspect include a computer program which, when executed by a companion device, causes the companion device to execute a method of an embodiment. The computer program may be stored on a computer-readable medium. The computer-readable medium may be non-transitory.

The invention may be implemented in digital electronic circuitry, or in computer hardware, firmware, software, or in combinations thereof. The invention may be implemented as a computer program or a computer program product, i.e. a computer program tangibly embodied in a non-transitory information carrier, e.g. in a machine-readable storage device or in a propagated signal, for execution by, or to control the operation of, one or more hardware modules. A computer program may be in the form of a stand-alone program, a computer program portion, or more than one computer program, and may be written in any form of programming language, including compiled or interpreted languages, and it may be deployed in any form, including as a stand-alone program or as a module, component, subroutine, or other unit suitable for use in a data processing environment.

The invention is described in terms of particular embodiments. Other embodiments are within the scope of the following claims. For example, the steps of the invention may be performed in a different order and still achieve desirable results.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

## Brief Description of the Drawings

Reference is made, by way of example only, to the accompanying drawings in which:

**Figure 1** is an example of a known arrangement used for forecasting;

**Figure 2** is an example of another known arrangement used for forecasting;

**Figure 3** is yet another example of a known arrangement used for forecasting;

**Figure 4** shows a flow chart for a forecasting method disclosed herein;

**Figure 5** shows a flow chart for a longest common continuous frequent sequence method;

**Figure 6** shows a training flow of a neural network architecture;

**Figure 7** shows a functional block diagram of a neural network architecture;

**Figure 8** shows another example of a training flow of a neural network architecture for forecasting data;

**Figure 9** shows a flow chart for training an ensemble of models for forecasting;

**Figure 10** shows a flow chart for testing an ensemble of models for forecasting;

**Figure 11** shows example forecasts generated using a forecasting method utilizing an ensemble of neural networks;

**Figure 12** is an example graphical user interface for instructing and displaying forecasts.

**Figure 13** is a block diagram of an information apparatus, or computer device.

## Detailed Description

Supervised deep learning (DL) models like Long Short-Term Memory (LSTM) neural networks and combined Convolutional Neural Networks (CNNs) and LSTMS (called Conv-LSTM) have proven effective for time series forecasting and have been applied to network traffic forecasting. Another popular module for forecasting is transformers. These models can detect periodicity and seasonality in network traffic data, leveraging temporal patterns for predictions. However, they do not account for the interdependencies between adjacent network cells, which can influence the traffic of the cell under consideration. Additionally, the accuracy of these models relies on abundant historical network traffic data for training, making them vulnerable to the problem of missing data. Traditional methods like imputation with mean or median are ineffective for non-stationary data. Consequently, addressing extensive missing data in a non-stationary context poses a significant challenge when using supervised data imputation techniques.

Forecasting network usage demands is important for network performance analysis and resource allocation. Effective forecasting often requires historic records of long time series-sequences (data from a sequence of consecutive time points). Practically obtaining longer time sequences is difficult and there will likely always be missing data in the time series records. These data gaps are primarily caused by user mobility, faulty sensors (for example, faulty or missing cell tower location signals or imprecise GPS sensor on the mobile device carried by the user), or intermittent network outages. Known models may not be trained on the longer time series due to the missing data and hence forecasting accuracy drops. Traditional data imputation techniques, such as mean or median imputation are commonly employed to handle missing data in time series sequences. However, the inventors found that these techniques are not effective when dealing with 5G data.

Disclosed herein is a proposed novel forecasting model for multi-step, multi-variate, and spatiotemporal time series analysis. In order to address the issue of missing data, the inventors employed a dynamic approach to select representative time step sequences from the dataset for modelling purposes. Specifically, in an example, a Longest Common Continuous Frequent Sequences (LCCFS) algorithm is introduced to dynamically identify the most suitable length of time series sequences for training the model. Also introduced is a method to incorporate spatial and local features by considering the influence of neighbouring cells on the target cell, improving prediction accuracy in complex scenarios. In an example, the inventors approach utilizes an encoder stack of Bidirectional-LSTM (BiLSTM) networks to capture the impact of changes in neighbouring cells on the target cell. The BiLSTM outputs may be concatenated and a self-attention module may be employed to assess the influence of neighbouring cells. Furthermore, in an example, to achieve multi-step and multi-variate forecasting, a RepeatVector available at Keras Team, "Keras Documentation: Repeatvector Layer," https://keras.Io/api/layers/reshaping layers/repeat vector/, accessed on May 6, 2023, a BiLSTM network, and a Time-Distributed dense layer (TDL) available at "Keras Documentation: Timedistributed Layer," https://keras.io/api/layers/recurrent layers/time distributed/, accessed on May 6, 2023 are used.

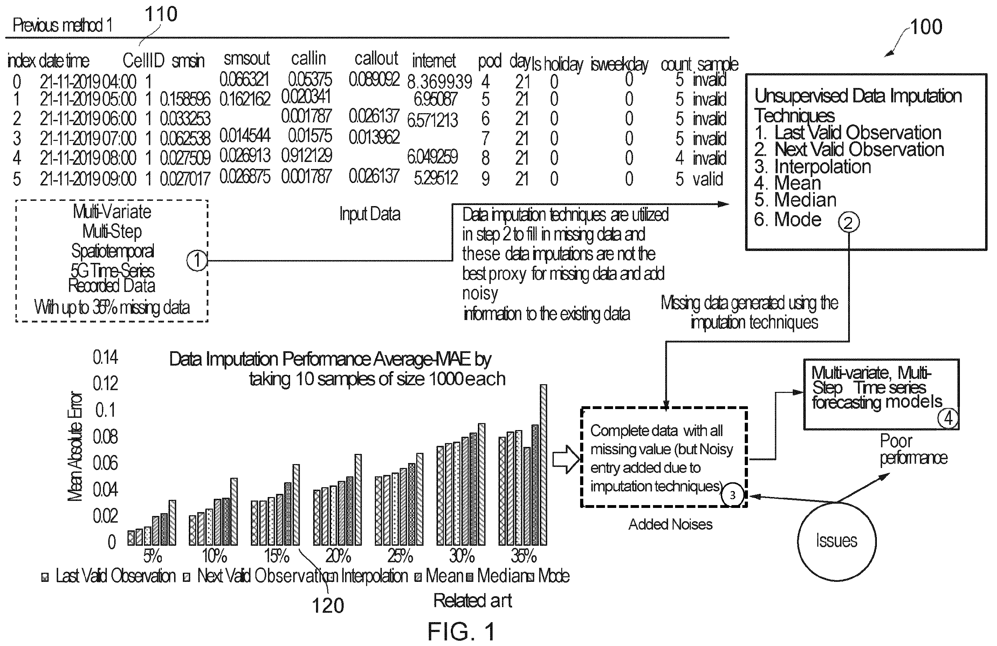

**Figure 1** shows an example 100 of a method known in the art for data preparation for forecasting multivariate data. A dataset taken from network usage in a city may comprise multi-variate, multi-step, spatiotemporal 5G time-series, recorded data. However, such data often contains large numbers of missing or corrupted data records. In this example, data has been taken from Telecom Italia's real-world dataset for Milan, Italy available at G. Barlacchi, M. De Nadai, R. Larcher, A. Casella, C. Chitic, G. Torrisi, F. Antonelli, A. Vespignani, A. Pentland, and B. Lepri, "A multi-source dataset of urban life in the city of milan and the province of trentino," Scientific data, vol. 2, no. 1, pp. 1-15, 2015. The dataset is represented in a table 110 in Figure 1 and includes: network cell ID, day of the week, and call records (internet, SMS-in/out, calls-in/out). The inventors found this dataset had up to 35% missing data entries. The table shows normalised values of the data records for smsin, smsout, callin and callout, with 1 representing the maximum number of users and quantity of data which can be handled. The internet data was recorded in bits/mb used in that time.

The dataset table in Figure 1 shows additional entries generated by the inventors including: day of observation (day), time of the day (pod, ranging from 0 to 23 hours), indicator variable whether it's a working hour (9am to 5pm), holiday indicator (indicating if it is a national holiday, 0 not holiday and 1 is holiday), weekday indicator (is weekday, indicating if the data was recorded on a weekday, 0 is not week day and 1 is weekday) and cell ID. Before implementing the known technique, the inventors pre-processed the data. That is, the inventors tested known methods with data they pre-processed.

The known technique uses an unsupervised method consisting of common statistical (e.g., mean, median, etc) or interpolation strategies or unsupervised learning to impute missing data in a data set. As shown in Figure 1 the missing data may be generated using a known unsupervised data imputation technique such as last valid observation, next valid observation, interpolation, mean, median or mode. The data imputation techniques are utilized to fill in missing data, however these data imputations are not the best proxy for missing data and add noising information to the existing data.

The inventors plotted the results of the known data imputation techniques for forecasting the multivariate data in a graph 120, titled "Data imputation Performance Average-MAE by taking 10 samples of size 1000 each". The inventors used Mean absolute error as an indicator for the accuracy of the data imputation technique. The graph shows each of the data imputation techniques above for varying percentages of missing data. The graph shows that generally the last valid observation and next valid observation provided the lowest MAE and the mode generated the highest MAE. Furthermore, the inventors found that for all imputation techniques the MAE increased as the percentage of missing data increased.

The accuracy of models using data imputation techniques are therefore very reliant on abundant historical network traffic data for training, making them vulnerable to the problem of missing data. As the percentage of missing data increases the error in the data imputation also increases, leading to inaccurate forecasts. That is, the data imputation increases to a very high level if the percentage of noisy data increases. The inventors found that the imputation techniques are not the best proxy for missing data and they add noisy information to the existing data. Hence using complete data with all missing values filled with imputed data (but noisy entry added due to the imputation technique) may lead to poor performance in forecasting multivariate, multi-step time series forecasting models.

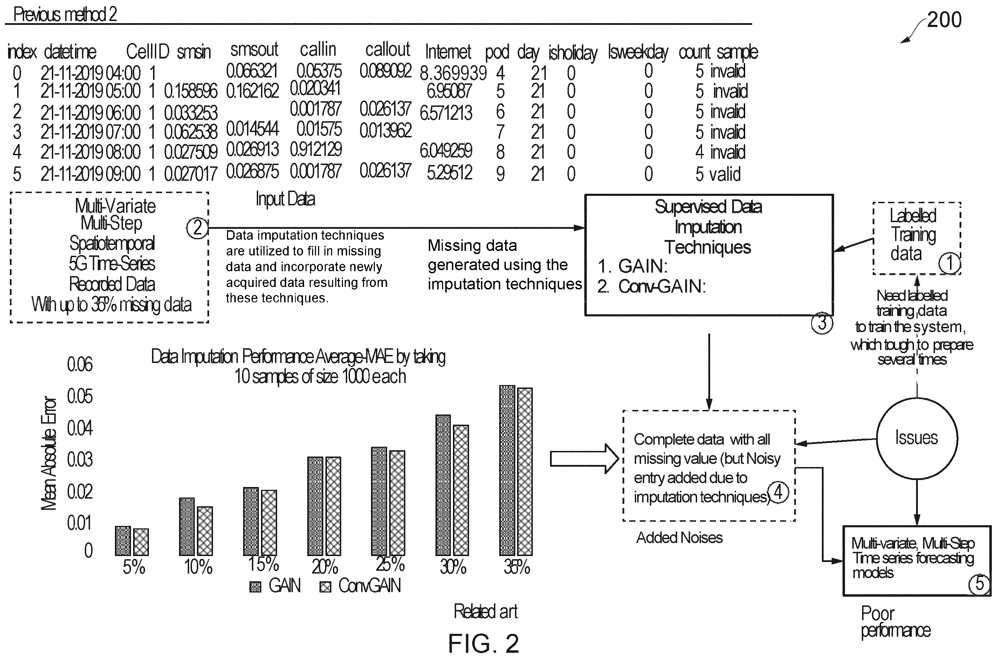

**Figure 2** shows an example 200 of another method known in the art for data preparation for forecasting multivariate data. In this method a strategy is to use supervised learning to impute missing data. The inventors used the same dataset as in the method above. As before, the multi-variate, multi-step, spatiotemporal 5G time-series, recorded dataset may have up to 35% missing data. Previous methods utilize data imputation techniques to fill in missing data and incorporate newly acquired data resulting from these imputation techniques. In this known technique, the missing data may be imputed using a supervised data imputation technique. For example a Generative Adversarial network, GAIN, framework, for example the GAIN disclosed in "Yoon, J., Jordon, J. and Schaar, M., 2018, July. Gain: Missing data imputation using generative adversarial nets. In International conference on machine learning (pp. 5689-5698). PMLR." may be used. Alternatively, in known methods a convolutional generative adversarial networks Conv-GAINS, such as the Conv-GAIN disclosed in Adeli, E., Zhang, J. and Taflanidis, A.A., 2021. Convolutional generative adversarial imputation networks for spatio-temporal missing data in storm surge simulations. arXiv preprint arXiv:2111.02823*.*, may be used to impute the data. Hence, the missing data in the dataset may be generated using any appropriate adversarial network technique.

Supervised data imputation techniques require labelled training data for learning. Labelled training data may be difficult to prepare for may data points and often requires a human input for verification. Hence, in some instances labelled training data may not be available. Despite using labelled training data, the inventors identified that the missing data imputed using the supervised models would introduce noise into the system and would show a very high error rate with an increase in the percentage of missing data. As a result, multi-variate, multi-step time series forecasting using the imputed data would perform poorly.

Figure 2 shows a plot of a Mean absolute error of a forecast model using the GAIN and CONV-GAIN techniques for data imputation. As with the previous method the graph shows "Data imputation Performance Average-MAE by taking 10 samples of size 1000 each". The inventors found that for all imputation techniques the MAE increased as the percentage of missing data increases, with the highest MAE when there were 35% missing data records. Furthermore, the graph shows that the Conv-GAIN imputation technique, with a lower MAE, generally performed more accurately than GAINs. However, in both the unsupervised and supervised imputation techniques the inventors found that the multi-variate, multistep time series forecasting models would perform poorly when the input data had a high number of missing data entries.

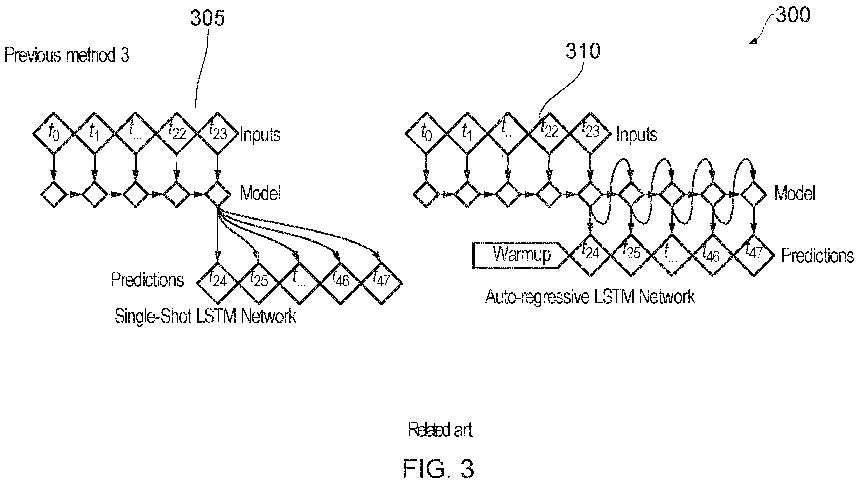

**Figure 3** shows a simple forecasting model 300 based on variants of Long short-term memory (LSTM) models known in the art. In this method a neural network is used directly for forecasting. Various LSTM models are known in the art for forecasting such as Single-shot LSTM networks 305 and Auto-regressive LSTM networks 310. In either case, the inventors found that these models do not forecast accurately when the training records have missing data, and therefore are trained with imputed data or sequence lengths that do not capture the temporal dynamics of the time series.

In the realm of 5G forecasting using deep learning (DL), researchers have explored various approaches to improve prediction accuracy. Oliveira et al. available at T. P. Oliveira, J. S. Barbar, and A. S. Soares, "Computer network traffic prediction: a comparison between traditional and deep learning neural networks," International Journal of Big Data Intelligence, vol. 3, no. 1, pp. 28-37, 2016achieved better results with recurrent neural networks (RNN) compared to stacked auto-encoders for Internet traffic prediction, however still used imputed data, thereby introducing unwanted noise into the dataset.

In another forecasting method, Wang et al. available at J. Wang, J. Tang, Z. Xu, Y. Wang, G. Xue, X. Zhang, and D. Yang, "Spatiotemporal 13odelling and prediction in cellular networks: A big data enabled deep learning approach," in IEEE INFOCOM 2017-IEEE conference on computer communications. IEEE, 2017, pp. 1-9 combined an auto-encoder with a long short-term memory (LSTM) network to consider spatial dependency but faced challenges with lossy representations and capturing nearby cell dependencies. The inventors surprisingly found that the call data records (CDRs) for a forecast location were dependent of CDRs for neighbouring cells. For example, if a user is travelling between locations in a city their data may be transmitted to multiple nearby cells. The method in Wang et al failed to capture this dependency, thereby leading to inaccuracy in the forecast. Furthermore, this known method used data imputation techniques, thereby introducing noise into the dataset.

In yet further forecasting methods, Zhang et al. available at C. Zhang, H. Zhang, D. Yuan, and M. Zhang, "Citywide cellular traffic prediction based on densely connected convolutional neural networks," IEEE Communications Letters, vol. 22, no. 8, pp. 1656-1659, 2018 introduced a densely connected convolutional neural network (CNN) for citywide traffic forecast, considering spatial and temporal dependencies. Recent work by Lin et al. available at J. Lin, Y. Chen, H. Zheng, M. Ding, P. Cheng, and L. Hanzo, "A datadriven base station sleeping strategy based on traffic prediction," IEEE Transactions on Network Science and Engineering, 2021 proposed an intelligent data-driven base station (BS) sleeping mechanism using a multigraph convolutional network (MGCN) to capture spatial information for spatiotemporal cellular traffic prediction. They incorporated hourly, daily, and weekly periodic data into a multi-channel LSTM system to extract temporal features. The MGCN-LSTM model outperformed other models in terms of forecast accuracy. In terms of energy-saving approaches, Gao et al. available at Y. Gao, M. Zhang, J. Chen, J. Han, D. Li, and R. Qiu, "Accurate loadprediction algorithms assisted with machine learning for network traffic," in 2021 International Wireless Communications and Mobile Computing (IWCMC). IEEE, 2021, pp. 1683-1688 presented load prediction models for traffic anticipation in cells. They employed a linear ensemble model with sub-models using linear regression and regression tree techniques, and trained the data with a residual convolutional neural network (ResNet) available at K. He, X. Zhang, S. Ren, and J. Sun, "Deep residual learning for image recognition," in Proceedings of the IEEE conference on computer vision and pattern recognition, 2016, pp. 770-778. While these previous works addressed spatio-temporal correlation in time series forecasting, the existing methods do not adequately account for challenges arising from missing training records in supervisory data. The use of data imputation techniques in these known methods introduce noisy entries into the dataset which lead to poor performance of the forecasting models. Furthermore, these models fail to capture the dependency of neighbouring or adjacent cells on the central cell (or forecast location), a factor the inventors found to have an effect on the accuracy of the forecast.

The method developed by the inventors forecasts spatiotemporal, multi-step, and multi-variate 5G usage time series accurately by capturing important characteristics and leveraging the training data. Unlike traditional methods relying on data imputation for missing records, the inventors' approach doesn't explicitly require such techniques. The inventors' algorithm identifies optimal time series patterns using "Time series step-size identification" and constructs a deep learning model that integrates all factors for precise forecasting.

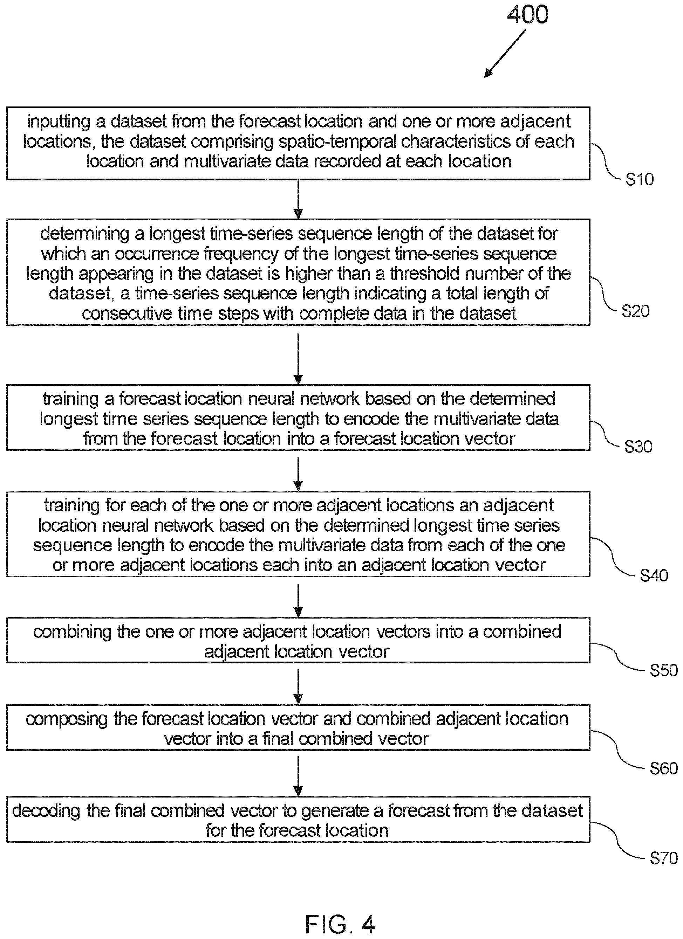

**Figure 4** shows steps 400 for training a neural network to forecast multivariate data in a forecast location in a network according to the inventors' method.

In an inputting step S10 a dataset from a forecast location and one or more adjacent locations is input into the model. The dataset comprises spatio-temporal characteristics of each location and multivariate data recorded at each location.

The inventors utilized Telecom Italia's real-world dataset for time series forecasting of cellular traffic data in Milan. The dataset spans an 11-week period and consists of millions of call data records (CDRs) sampled at 10-minute intervals. However, of course any suitable dataset may be used.

The CDRs in the Telecom Italia's dataset contain eight features related to cellular network usage, including CellID (cellular site identifier), Datetime, SmsIn (incoming SMS count), SmsOut (outgoing SMS count), CallIn (incoming call count), CallOut (outgoing call count), and Internet (internet activity). Milan's city map is divided into 100 × 100 areas, each covering 0.05 *km2,* and the dataset's CDRs are spatially aggregated based on the coverage area of the processing base station. Despite substantial missing data records, researchers have successfully utilized this dataset for predicting future network traffic and studying cellular network dynamics. Its significance extends not only to 4G networks but also to 5G and beyond, making it an invaluable resource for time-series forecasting in the realm of cellular networks.

In step s10 the data may be prepared or pre-processed before being input into the model. For example, the original Milan dataset used by the inventors was initially collected at 10- minute intervals, but forecasting at this level of granularity may lead to network instability or excessive overhead. To overcome these challenges, the inventors resampled the data by aggregating the traffic on an hourly basis. For training the proposed learning model, the inventors extracted multiple features from the Milan dataset. In addition to the original network features such as network cell ID, day of the week, and call records (internet, SMS-in/out, calls-in/out), the inventors included six additional specially selected features. These features encompassed the day of the observation, time of the day, indicator variable whether its a working hour (9 am to 5 pm), holiday indicator, weekday indicator, and cell ID. The units of the processed dataset used in this method are the same as the dataset discussed in relation to Figures 1 and 2. The inventors found that introducing the additional features improved the forecasting accuracy of the model, however, of course any number of variables available in the multivariate data may be used.

To preprocess the continuous variables, the inventors applied clipping to handle outliers by setting the threshold at the *95th* percentile. Following that, they performed min-max standardization to scale the variables within the range of 0 to 1. The inventors time series forecasting analysis considered the correlation between the call data records of the targeted cell, that is the forecast location, and its adjacent (neighbouring) cells. The inventors found that accounting for all eight neighbouring cells surrounding each cell was preferable and produced the highest accuracy forecasts. However, capturing the effect of the dependency of one or more adjacent cells (or adjacent locations) also improved the forecasting accuracy for the forecast location. In situations where cells were located at corners or sides and lacked all eight neighbouring cells, the inventors employed zero-based padding to prepare the time series data. For the neural network, the inventors provided the original five features from each of the eight neighbouring cells as inputs. Additionally, for the central cell ($C0$), all 11 features, incorporating the six selected features were used.

In a determining step S20, a longest time-series sequence length of the dataset is determined. The time-series sequence length indicates a total length of consecutive time steps with complete data in the dataset, with an occurrence frequency of the longest time-series sequence lengths appearing in the dataset being higher than a threshold number of the dataset.

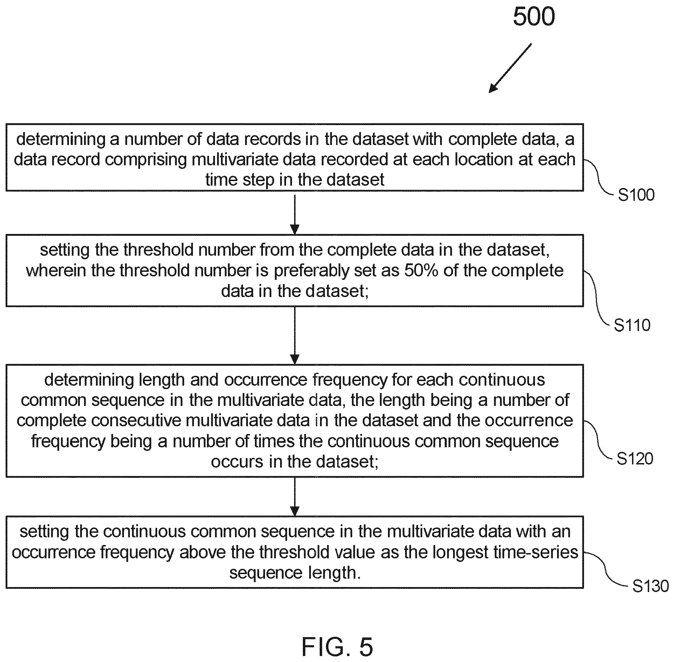

The inventors developed a method of "Longest Common Continuous Frequent Sequences" (LCCFS) to identify a longest time-series sequence length in the dataset. More details of the LCCFS are provided in relation to Figure 5 below.

In a training step S30 a forecast neural network is trained based on the determined time series sequence length to encode the multivariate data from the forecast location into a forecast location vector. For example, the inventors used a Bidirectional Long short-term memory (Bi-LSTM) recurrent neural network, but of course any appropriate neural network may be used. For example, an appropriate neural network may be another recurrent neural network.

A bidirectional Long-short term memory (BiLSTM) model is a type of recurrent neural network (RNN) that can learn long-term dependencies in sequence data. It does this by using two LSTMs, one that reads the sequence from left to right and the other that reads it from right to left (that is, one LSTM reads the sequence forwards in time, and one reads the sequence backwards in time). The outputs of the two LSTMs are then combined to give a representation of the sequence that takes into account both the past and the future.

The BiLSTM is updated in two directions: forward and backward. The forward LSTM reads the sequence from left to right, and the backward LSTM reads the sequence from right to left. The outputs of the two LSTMs are then combined to give a representation of the sequence that takes into account both the past and the future. The BiLSTM is updated using, for example, a backpropagation algorithm. Backpropagation is an algorithm that is used to update the weight of a neural network in order to minimize a loss function. In the case of the BiLSTM, the loss function is the error between the predicted output of the BiLSTM and the actual output in the sequence (for example determined using Mean absolute error).

The functionality of the BiLSTM can be shown as follows:

$$h_t = LSTM_{forward}\left(x_t, h_{\{t-1\}}\right) \quad (1)$$

$$g_t = LSTM_{backward}\left(x_t, g_{\{t+1\}}\right) \quad (2)$$

$$y_t = f\left(concatenate(h_t, g_T)\right) \quad (3)$$

Here $x_t$ represents the input at time step t, $h_t$ represents the hidden state of the forward LSTM at time step t, $g_t$ represents the hidden state of the backward LSTM at time step t, $h_{\{t-1\}}$ represents the hidden state of the forward LSTM at the previous time step t-1 and $g_{\{t+1\}}$ represents the hidden state of the backward LSTM at the next time step t+1.

$LSTM_{forward}$ and $LSTM_{backward}$ denote the LSTM functions for forward and backward directions, respectively. 'concatenate' is the operation that concatenates the outputs of the forward and backward LSTMs. 'f' is the activation function that transforms the concatenated output into the final output $y_t$. The Bidirectional LSTM processes the input sequence $x_t$ from left to right with the forward LSTM and from right to left with the backward LSTM. The final output $y_t$ goes to the next layer.

In a training step S40, for each of the one or more adjacent locations an adjacent location neural network is trained based on the determined time series sequence length to encode the multivariate data from each of the one or more adjacent locations each into an adjacent location vector. As above, for each of the adjacent location neural networks the inventors trained a BiLSTM neural network.

In a combining step S50 the one or more adjacent location vectors are combined into a combined adjacent location vector. In an example with more than one adjacent location, the combining step may comprise concatenating the adjacent location vectors for each adjacent location into a concatenated location vector. The concatenated location vector may be input into a sequence of two multilayer perceptron layers, the output of a first multilayer perceptron layer being input into a second multilayer perceptron layer. The inventors found that the multilayer perceptron layers may capture the influence of neighbouring cells on the central cells in a subsequent stage.

The skilled person would understand that in an example with one adjacent location vector, the combing step may combine, or transform, the one adjacent location vector into the combined adjacent location vector. For example, the one adjacent location vector may be passed through the multilayer perceptron layers with the output being the combined adjacent location vector.

In a composing step S60 the forecast location vector and combined adjacent location vector are composed into a final combined vector. The forecast location vector and combined location vector may be composed into the final combined vector by concatenating the forecast location vector and combined adjacent location vectors into a final latent vector. The composing may further comprise inputting the final latent vector into a self-attention mechanism and determining as an output the final combined vector.

In a decoding step S70 the final combined vector may be decoded to generate a forecast from the dataset for the forecast location. The decoding step may comprise training an output neural network based on the determined time series sequence length to encode the final combined vector, and inputting hidden layers of the trained output neural network into a time distributed dense layer to generate an output, the output from the time distributed dense layer being the forecast.

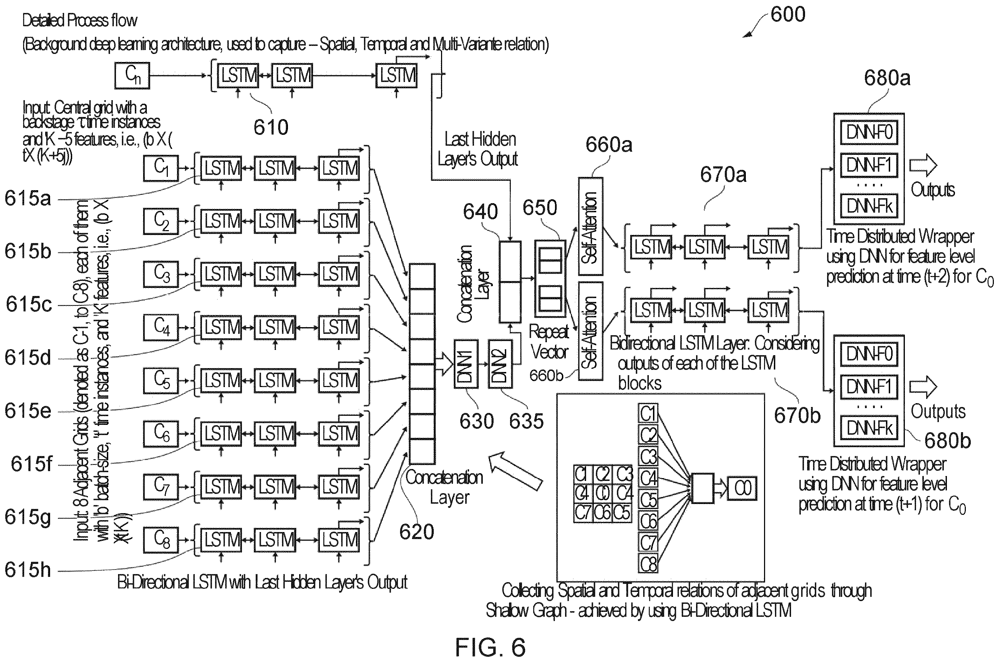

The output neural network may be a BiLSTM neural network. Hence, each hidden layer input into the Time distributed layer may be a hidden layer of the Bi-LSTM neural network. The skilled person would understand that the forecast generated by the Time distributed dense layer may be used to train each of the above neural networks, that is the forecast location neural network, each of the adjacent location neural networks and the output neural network. For example, in a first training run the neural networks may be assigned random weights and the multivariate time series data input into them. The forecasting method may then generate a forecast. The generated forecast may then be used to inform a backpropagation step for training each of the neural networks. For example, the generated forecast be used to calculate a mean absolute error for backpropagation. More detail of backpropagation is given in connection with Figure 6 below.

The final combined vector may be replicated using, for example, a repeat vector unit and each replicated final combined vector may be decoded to generate a forecast at a different time point. Using such a method, a multi-step forecast may be generated. That is, the method may be used to generate a forecast for a time step t+1 and a time step t+2.

The inventors found that the accuracy of the forecast may be improved by training more than one model using different time-series sequence lengths. For example, the forecasting method may further include determining one or more shorter time-series sequence lengths of the dataset and repeating, for the one or more shorter time-series lengths, the steps of training the forecast locations neural network and the one or more adjacent location neural networks, combining into a combined adjacent location vector, composing into a final combined vector, decoding to generate a forecast. Once the neural networks are trained, an ensemble of the generated forecasts for each of the longest time-series sequence length and the one or more shorter time-series lengths may be determined to generate a final forecast for the forecast location. That is, for example, an ensemble of each of the trained models may be taken and the output of the ensemble used as a forecast. The ensemble may be a weighted average ensemble determined using, for example, a grid search method.

**Figure 5** shows steps 500 for determining a time series step-size for training the neural network model. The time series step size defines the total length of a consecutive time series sequence. The inventors found that using the longest time series step size defined by the LCCFS for training provided accurate forecasts. To determine the appropriate length for the time series step size, the data for each date may be partitioned into 24-hour chunks, considering the model design to forecast on a daily basis. However, due to the presence of 35% missing records in the Milan dataset, the inventors found it was not feasible to utilize complete 24-hour step sizes. To overcome this challenge, the inventors identified the "Longest Common Continuous Frequent Sequences" (LCCFS).. Essentially, these sequences comprise of longest consecutive time steps without any missing records in between.

Example details of the LCCFS process are as follows:
In a determining step s100, a number of data records with complete data may be determined. A data record may comprise, for example, multivariate data recorded at each location at each time step in the dataset.

Let d represent a day number, with 1 ≤ d and let t represent the hour of the day, with 1 ≤ t ≤ 24. Now, considering that K% of the data may be missing in total, based on the values of d and t, the total number of data records with complete data (that is, valid time series records) may be determined using the following equation:

$$|valid_records| = (d \times t)\left(1 - \frac{K}{100}\right) \quad (4)$$

In a setting step s110, a threshold number may be set from the complete data in the dataset. For example, in the proceeding steps for determining a longest continuous common sequence, an occurrence frequency of a time-series may be compared to the threshold number set from the complete data. The inventors found through an empirical method that, with 35% missing data, setting a threshold number as 50% of the complete data (for example 12, in a single day data set uses the figures above) generated the most accurate forecast. Of, course, the threshold number may vary depending on the percentage of missing data in the dataset.

In a second determining step s120, a length and occurrence frequency for each continuous common sequence in the multivariate data may be determined. The length may be a number of complete consecutive multivariate data in the dataset and the occurrence frequency the number of times the continuous common sequence occurs in the dataset.

An example of determining the length and occurrence frequency is as follows. Let $D_i$ represent the data corresponding to the $i^{th}$ day, where 1 ≤ $i$ ≤ (Total number of days). Additionally, let $H_{d=i,t=1}$, $H_{d=i,t=2}$, ... , $H_{d=i,t=24}$ denote the hours for the ith day.

$$D_t = \{H_{d=i,t=1}, H_{d=i,t=2}, \ldots, H_{d=i,t=24}\} \qquad (5)$$

where, as before, d represent a day number, with 1 ≤ d and let t represent the hour of the day, with 1 ≤ $t$ ≤ 24.

However, due to the presence of missing data, some of $H_{d=i,t=1}$, $H_{d=i,t=2}$, ... , $H_{d=i,t=24}$ may contain null (or missing) values, which can be spread across all the dates. The inventors scanned all the records of all the dates to obtain a list of all continuous common sequence along with their occurrence frequency (and the total percentage of valid time series records (i.e., the records where $H_{d,t}$ is not null) may also be obtained). Let the length of a continuous common sequence of hourly records without any missing or null values be denoted by $L_C$, where $1 \leq L_C \leq 24$. The list of all time series sequences with a step size of $w$ may be denoted by $S_{LC}$=$w$ and be given by:

$$S_{L_C=W} = \Big\{\{H_{d=i,t=1}, H_{d=i,t=2}, \ldots, H_{d=i,t=w}\}, \{H_{d=i,t=2}, H_{d=i,t=3}, \ldots, H_{d=i,t=w+1}\}, \ldots, \{H_{d=i,t=(h\%24)}, H_{d=i,t=(h\%24+1)}, \ldots, H_{d=i,t=(h\%24+w)}\}\Big\} \quad (6)$$

where $1 \leq h \leq 24$. The count of the number of time series sequences with a step size of $w$ may be further represented as $|S_{LC} = W|$. To obtain the LCCFS, the inventors calculated all $S_{LC}$ for each value of $LC$ and determined their respective counts |

$S_{LC}|$,

In a setting step s130, the (longest) continuous common sequence in the multivariate data with an occurrence frequency above the threshold value may be set as the longest time-series sequence length. Valid time series records, excluding missing data, may be determined based on the percentage K% of missing data. For example, the selection based on the LCCFS may apply the following steps.

1) For all values of w, check $S_{LC} = w$ and discard the records if |SLC=w| is less than 50% of |valid records|.
2) From the remaining list of time series, select the list of time series from SLC having the highest value of w. Suppose w' is the highest value of *w* after elimination applied in the previous step. In this example, this results in the selection of list of time series $S_{LC}$=w' as LCCFS.

In this example, the inventors used a Longest common continuous frequency sequence to determine a longest time-series sequence length of the dataset. However, of course other methods may be used to determine an appropriate length for the longest time-series sequence.

The inventors found that with the Milan dataset, the computed LCCFS size was 7. In terms of the multi-step model design perspective, the best model employed the initial five time series steps for training and the subsequent two continuous sequences for forecasting. From the longest time-series sequence length, the inventors were able to acquire a strong understanding of time series patterns and enable effective predictions. In an example method using three neural network models with different time series sequence lengths, the highest sequence length from LCCFS was obtained for sequence length 7. The second highest for sequence length 6 and third highest for sequence length 5. The inventors utilized all first three ranks of LCCFS of these sequence length for designing the ensemble of the system disclosed herein.

**Figure 6** shows a training flow 600 of the neural network architecture disclosed herein for accurate multi-variate time-series forecasting. For a clearer comprehension of the architecture and the specific roles of each component, the workflow has been partitioned into three distinct notional modules, as shown in Figure 6.

*Module 1:* In a first module, the impact of time series features from eight neighbouring cells on a central/targeted cell may be examined. As discussed above the inventors used the Milan dataset and investigated multivariate time-series data associated with 5G network usage. Of course, this method may be applied to any multivariate data. The inventors assumed that changes in 5G network usage requirements for each cell *Cj* (where $1 \leq j \leq 8$) over time may influence the forecast for the targeted cell (or target location) *C*0. To account for the influence of each adjacent neighbouring cell *Cj* (or adjacent locations), where ($1 \leq j \leq 8$), on *C*0*,* the inventors utilized a stack of neural networks. In this example the neural networks used by the inventors were a stack of BiLSTM networks 610, 615a-615g (that is, recurrent neural networks). However, any suitable neural network may be used. The inventors found that the BiLSTM encoders effectively capture temporal dynamics and encode neighbourhood data for accurate forecasting in multivariate-multistep time series scenarios.

As discussed in relation to Figure 4, a dataset comprising spatiotemporal characteristics of each location and multivariate data recorded at each location may be input. Data for one or more adjacent locations may be input along with data for a forecast location. The inventors found that the most accurate forecasts for a forecast location may be generated when all immediate adjacent locations were considered. That is, accurate forecasts may be generated when the dataset included data for the 8 neighbouring locations of a forecast location.

The dataset used by the inventors, and as discussed in relation to Figures 1 and 2, had been taken from Telecom Italia's real-world dataset for Milan, Italy. A section of the dataset is represented in the table in Figure 1 and includes the 5 features: network cell ID, day of the week, and call records (internet, SMS-in/out, calls-in/out). The inventors found this dataset had up to 35% missing data entries. The table shows normalised values of the data records for smsin, smsout, callin and callout, with 1 representing the maximum number of users and quantity of data which can be handled. The internet data was recorded in bits/mb used in that time.

The dataset table in Figure 1 shows 7 additional entries generated by the inventors including: day of observation (day), time of the day (pod, ranging from 0 to 23 hours), indicator variable whether it's a working hour (9am to 5pm), holiday indicator (indicating if it is a national holiday, 0 not holiday and 1 is holiday), weekday indicator (is weekday, indicating if the data was recorded on a weekday, 0 is not week day and 1 is weekday) and cell ID.

The dataset may be processed as discussed in relation to Figures 4 and 5. That is, a longest time-series sequence length of the dataset may be determined. The longest time-series sequence length of the dataset may be determined using a "Longest common continuous frequent sequence" (LCCFS) as described in relation to Figure 5. Using the Milan dataset, the inventors determined the LCCFS as a 7-hour series.

Let $x_j = (x_{j1}, x_{j2}, \cdots, x_{ji}, \cdots, x_{jn})$ be the input sequence representing the features from cell $C_j$, where $x_{ji}$ denotes the feature list (i.e., the data) at the $i^{th}$ time step. Further let the total number of time steps be denoted as *n.* For the adjacent neighbour cells (or locations), the inventors considered the 5 features originally available in the dataset, $k$ = 5 features, available at each time step. For the forecast location, (that is the central cell), the inventors considered the 5 original features available in the dataset and also considered the 6 additional features they generated. Hence, for the central cell C0 the value of $k$ = 11.

For each of the adjacent locations C1-C8, the inventors trained a neural network (which may be called adjacent location neural networks and in this example were Bi-LSTM model,) based on the determined time series sequence lengths to encode the multivariate data from each adjacent location into an adjacent location vector.

When the sequence xj is passed through a BiLSTM layer, the output may be represented as $h_j = (h_{ji}, \cdots, h_{ji} \cdots, h_{jn})$, where $h_{ji}$ is the output at time step i and may be computed as:

$$hji = [\rightarrow hji; \leftarrow hji] \quad (7)$$

where, $\rightarrow h_{ji}$ is the forward hidden state at time step $i$, and $\leftarrow h_{ji}$ represents the backward hidden state at time step $i$.

The inventors utilized the output of the last layer of BiLSTM, that is an adjacent location vector for each of the adjacent cells, as the impact of cell's 5G Network usage. Furthermore, the last hidden layer of the Bidirectional Long ShortTerm Memory (BiLSTM) denoted as $h_{jn}$, which serves as the output of the BiLSTM stack, was used. The inventors combined each of the adjacent location vectors into a combined adjacent location vector.

For example the outputs of the Bi-LSTM models which may be denoted as $yn, Cj$ for all $1 \leq j \leq 8$, may be combined by a concatenation step 620 to form a single vector in the subsequent step. The concatenation operation inherently captures the spatial arrangement of neighbouring cells through its fixed order of arrangement. The concatenated output vector may be represented as x', and given as

$$x' = concat\ (y_{m,C1}\ , y_{m,C2}, \ldots y_{m,C8}) \quad (8)$$

Furthermore, the combining step may comprise inputting the concatenated location vector into a sequence of two multilayer perceptron layers, the output of a first multilayer perceptron layer being input into a second multilayer perceptron layer. For example, the inventors passed the vector $x'$ through a sequence of two multilayer perceptron (MLP) layers. The inventors found that this may capture the influence of neighbouring cells on the central cells in a subsequent stage.

The output $Y'$ after the first perceptron layer may be computed as:

$$Y\ ' = f\ (W'x' + b') \quad (9)$$

where $W' = (w1', w2', \ldots, wn')$ is a weight vector and b' is a scalar bias term and the f represents the activation function. In this example the inventors used the SeLu activation function, available at D. Pedamonti, "Comparison of non-linear activation functions for deep neural networks on mnist classification task," arXiv preprint arXiv:1804.02763, 2018. The output $Y'$ from this layer may be further given to a second perceptron layer, which may do a similar operation as in equation 9 resulting in an output $Y''$.

Similarly, for the forecast location (i.e., the central cell C0), the inventors trained a neural network (which may be referred to a forecast location neural network and in this example is a Bi-LSTM model 610) based on the determined time series sequence lengths to encode the multivariate data from the forecast location into a forecast location vector. The temporal influence of the 5G usage features in the dataset and other factors may be utilized. An objective was to capture the impact of temporal changes in 5G usage on the central cell and predict its future 5G data usage. To achieve this, the inventors utilized the BiLSTM layer 610 by inputting the central cell's feature. By using the same type of BiLSTM layer as described before, the output of the last block ($yi,Cn$) specifically for the central cell ($ym, C0$) was determined.

In a composing step the forecast location vector and combined adjacent location vector may be composed into a final combined vector. For example, to compose the forecast location vector and combined adjacent location vectors into a final combined vectors the inventors used a concatenation operation 640. The output Y" and the output of the last block of the BiLSTM model $y_{i,C_n}$ were concatenated into a single vector. Let z represent the concatenation of both outputs as given in equation 7.

$$z = concat\ (Y\ '', y_{i,C_n}) \quad (10)$$

The final combined vector may be replicated using a repeat vector unit 650. For example, the repeat vector unit is shown as a second notational module in Figure 6.

*Module 2:* This module of the architecture incorporates the RepeatVector unit to expand the output of the forecasting model for multi-step forecast. By utilizing a RepeatVector operation, the output obtained from equation 10 in module 2 may be replicated $r$ times. Hence, given an input with, for example, $z \in R^{n\times1}$, the RepeatVector operation may produce $Zrepeat$ as shown below:

$$Zrepeat = RepeatVector(z,r) = \left[z^{(1)}, z^{(2)}, \cdots, z^{(i)}, \cdots, z^{(r)}\right] \in R^{n \times r} \quad (11)$$

Here, each element $z(i)$ within the matrix *Zrepeat* corresponds to the original vector $z$. The inventors used the model to forecast the output for two consecutive time-steps. That is, for example, given an input at time t, the model may predict a forecast for times t+1 and t+2. Hence, as the model was set to predict two consecutive time-steps, the value of $r$ was set to 2. Of course, the model may be used to predict less than two consecutive time steps (i.e., one time step) or more than 2 consecutive time steps.

Composing the forecast location vector and combined adj acent location vectors into the final combined vector may additionally comprise inputting the single vector (for example the concatenated vector z in equation 10) into a self-attention mechanism 660a, 660b and determining as an output the final combined vector. The self-attention mechanism 660a 660b is shown as part of a notional module 3 in Figure 6. The skilled person would understand that the number of self-attention mechanism used may depend on the number of repeat vectors. For example, if a single time-series is forecast a single self-attention mechanism may be used. In this example, two consecutive time-steps are predicted. Hence, two self-attention mechanisms are shown in Figure 6.

*Module 3:* In this particular module of the architecture, a self-attention layer may be employed to facilitate and enhance the multi-variate time-series forecast in the final output. The self-attention layer, originally proposed in A. Vaswani, N. Shazeer, N. Parmar, J. Uszkoreit, L. Jones, A. N. Gomez,L. Kaiser, and I. Polosukhin, "Attention is all you need," Advances in neural information processing systems, vol. 30, 2017, may be used to evaluate the importance of the features computed in the preceding stages by utilizing learned attention weights.

In this example with two vectors generated from the repeat vector operation, each vector $z^i$ within the *Zrepeat* matrix underwent a self-attention operation, resulting in the calculation of context vectors $V_l^{(i)}$ for each of the $n$ elements in $z^{(i)}$ as follows:

$$V_l^{(i)} = \sum_{k=1}^{n} \alpha_{l,m}{}^{(i)} z_m^{(i)} \qquad (12)$$

Here $z_m^{(i)}$ denotes the $m^{th}$ element of $z^{(i)}$. Further, the attention weight $\alpha_{l,m}{}^{(i)}$ is assigned to the $l^{th}$ element of the input sequence when computing the $m^{th}$element of the context vector is determined through a softmax function applied to a set of learned attention scores. These attention scores, for example, quantify the similarity between each pair of elements in the input sequence. The calculation of attention weights may be defined as follows:

$$\alpha_{l,m}{}^{(i)} = \mathrm{softmax}\left(\mathrm{score}\left(z_l^{(i)}, z_m^{(i)}\right)\right) \quad (13)$$

Here in equation 10, $\mathrm{score}\left(z_l^{(i)}, z_m^{(i)}\right)$ represents a learned function that computes a similarity score between the $l^{th}$ and $m^{th}$ elements of the input sequence. The inventors used a score function which employed a scaled dot product, which may be expressed as follows:

$$\mathrm{score}\left(z_l^{(i)}, z_m^{(i)}\right) = (z_l^{(i)} \cdot W'_{query}) \cdot (W'_{key} \cdot z_m^{(i)}) \quad (14)$$

In this expression, $W'_{query}$ and $W'_{key}$ denote learned weight matrices that project the input sequence into the query and key spaces, respectively.

The final combined vector may be decoded in a decoding step to generate a forecast from the dataset for the forecast location. The decoding step (or decoding module) may form part of the notional module 3 shown in Figure 6. For example, the decoding step may include training a neural network based on the determined time series sequence length to encode the final combined vector; inputting each hidden layer of the trained neural network into a time distributed dense layer 680a, 680b to generate an output, the output from the time distributed dense layer being the forecast.

In this example, the outputs $V_l^{(i)}$ obtained from the self-attention layer are passed through a stack of BiLSTM layers 670a, 670b. That is, the neural network used by the inventors was a BiLSTM neural network. Of course, any suitable neural network may be used. However, in contrast to the previous BiLSTM layers (i.e. the Bi-LSTM layer used in the notional module 2), all the hidden layers of this BiLSTM layers may be collectively provided as input to a subsequent TimeDistributed dense layer (TDL) 680a, 680b . The inventors found that an inclusion of the TDL may further enhance the prediction of multivariate features by independently processing the hidden layer outputs for each time step.

In this example, within the TimeDistributed dense layer (TDL), the hidden state outputs ( $h_1^{(i)}, h_2^{(i)}, \ldots, h_l^{(i)}, \ldots, h_n^{(i)}$ ) are processed individually. Each element $h_l^{(i)}$ at time step *l* was passed through $\mathcal{L}$ dense layers with shared learnable parameters $\theta$, resulting in an output $y_{ol}^{(i)}$ computed as follows:

$$y_{ol}^{(i)} = f\left(\mathcal{L}\left(h_l^{(i)}; \theta\right)\right) \quad (15)$$

Here, *f* represents an optional activation function, where, for example the inventors used SeLU. Furthermore, in this example the value of $\mathcal{L}$ was set to 5.. The value 5 was chosen as a design parameter. The inventors repeated this operation defined in equation 1 above repeated for all *l* in the range of 1 to *K,* where K represents the total number of variables in the multi-variate output. In an example where a vector repeat operation has been used, as discussed above, the entire operation described in this module may be repeated for all *r* vectors in *Zrepeat.*

Hence, in this example the proposed system utilizes a sequence of length *n* as the input. Each element in this sequence may comprise 11 features from a central target cell *C*0 and 5 features from each of the eight neighbouring cells (*C*1 to *C*8) till a time 't'. From this given input, the proposed system may forecast the network usage of *C*0 for the subsequent two time steps (*t* + 1 and *t* + 2) for five usage variables: smsin, smsout, callin, callout, and internet.

The inventors trained the neural network using backpropagation techniques. Mean Absolute Error (MAE) is a widely used metric to assess the accuracy of time series forecasting models (see T. Chai and R. R. Draxler, "Root mean square error (rmse) or mean absolute error (mae)?-arguments against avoiding rmse in the literature," Geoscientific model development, vol. 7, no. 3, pp. 1247-1250, 2014. It measures the average absolute difference between each predicted value and its corresponding actual value. The formula for MAE in time series forecasting is:

$$MAE = \frac{1}{n}\sum_{i=1}^{n}\left|Y_i - \widehat{Y}_i\right| \quad (16)$$

Here, n is the total number of observations in the dataset, $Y_i$ represents the actual value of the i-th observation, $\hat{Y}_I$ represents the predicted value of the i-th observation, |.| denotes the absolute value function, and Σ indicates the sum of the absolute differences between the predicted and actual values across all observations.

To train the neural network, the computed MAE loss was back-propagated through the system and the weights of each neural network in the system were optimized through an ADAM based optimizer based on stochastic gradient descent. For example, the training progress was monitored, and the process was halted if the MAE improvement was less than or equal to 0.01 for five consecutive epochs. The last saved model was chosen as the final model. Of course, other training regimes may be used to train the neural network.

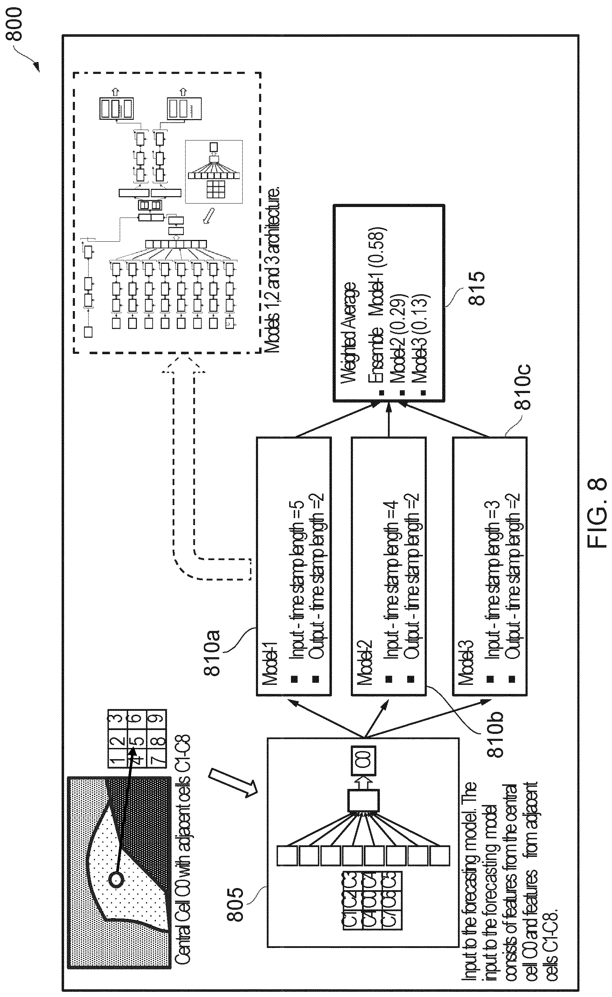

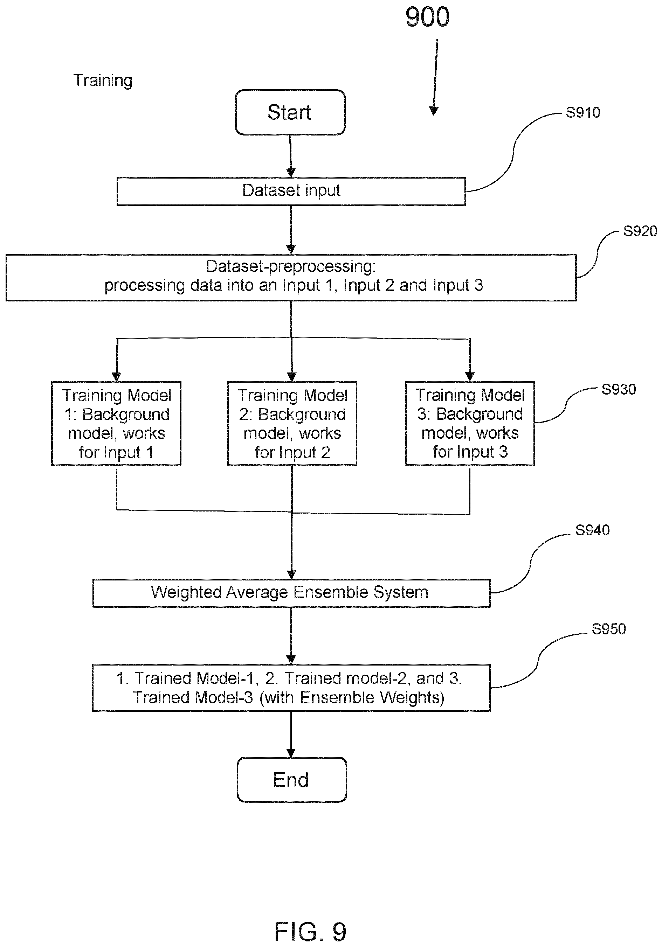

In this example, the architecture of a single neural network model and training method for that method has been described. However, the inventors found that multiple neural network models may be trained, and an ensemble taken to improve the accuracy of the forecast. Example methods for training an ensemble of neural network models are given in connection with Figures 8 and 9 below.

To train the neural network model the inventors used multivariate data, in this case taken from the Milan dataset. To use the multivariate data in training, an assumption that complex relations between multiple time-series was made. To emphasize the relationships among multiple time-series, the problem of multivariate time-series forecasting based on a data structure called multivariate temporal graph was formulated (in this case the inventors selected it as a case of non-Euclidean learning. The graph may be denoted as

$$G = (X, W) \quad (17)$$

where, $X = \{x_{it}\} \in \mathbb{R}^{N\times T}$ stands for the multivariate time-series input, where N is the number of time-series (nodes), and T is the number of timestamps.

The observed values at timestamp t may be denoted as $X_t \in \mathbb{R}^{T}$ . $W \in \mathbb{R}^{N\times N}$ is the adjacent matrix, where $w_{ij} > 0$ indicates that there is an edge connecting nodes i and j, and $w_{ij}$ indicates the strength of this edge.

Given observed values of previous K timestamps, $X_{t-k}$ , ... , $X_{t-1}$ the task of multivariate timeseries forecasting aims to predict the nodes values in a multivariate temporal graph $G = (X, W)$for the next H timestamps, denoted by $\hat{X}_t$, $\hat{X}_{t+k}$, ... , $\hat{X}_{t+H-1}$. These values can be inferred by the forecsting model M with parameter $\varphi$ and a graph structure G, where G can be input as prior or automcatically inferred from data.

$$\hat{X}_t, \hat{X}_{t+k}, \ldots, \hat{X}_{t+H-1} = F(X_{t-F}, \ldots \ldots, X_{t-1}; G;\ \varphi)\ (18)$$

Accurately predicting 5G network usage may be useful for efficient network resource allocation and high-quality service delivery. However, dynamic usage patterns, nonstationary usage distribution, and the presence of a high amount of missing data make forecasting future network usage statistics challenging. To address these challenges, the inventors propose a neural network based time series forecasting approach which may handle multistep, multi-variate, and spatiotemporal time series forecasting problems. The proposed approach may scan the data for continuity of time-steps and identify an optimal sequence length in order to address the issue of missing records in supervisory data. It may use separate BiLSTM layers to capture the impact of temporal 5G data usage changes in adjacent networks. Further, it may utilize adjacent cell's impact captured in permutationally invariant ordering for the central/targeted cell. In examples disclosed herein, the learning techniques used to capture the impact of changes in neighbouring cells on the target cell and for multi-step and multivariate forecasting are: Self-attention, a RepeatVector, a BiLSTM network, and a Time distributed dense layer. The proposed approach outperforms existing state-of-the-art methods on the Milan dataset and may improve forecast accuracy in various applications, including network traffic forecasting.

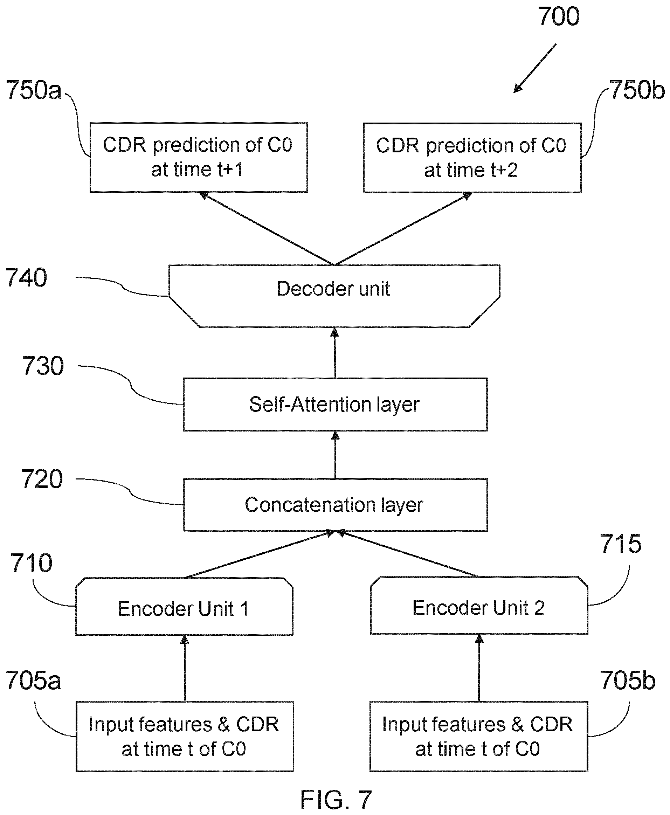

**Figure 7** shows a functional block diagram 700 of a neural network architecture for multivariate time-series forecasting. The neural network architecture in Figure 7 may be the same or substantially the same as the neural network architecture discussed in Figure 6 above.

In a first input block 705a, 705b, input data may be loaded into the system. As above, the data used by the inventors was taken from the Milan dataset. For the forecast location, the 5 features in the dataset were input along with 6 further selected features. For each of the neighbouring cell, the 5 features in the Milan dataset were input.

The input data may be input into an Encoder unit 710, 715. For example, the forecast location data may be input into an Encoder unit 1 710. The Encoder unit 1 may consist of a neural network such as the BiLSTM neural network discussed in relation to Figure 6. The Encoder unit 1 may encode the input features of the forecast location (or central cell) into a forecast location vector.

Similarly, for each of the adjacent locations (e.g., the neighbouring cells), an Encoder unit 2 may encoder the input features (e.g., the call data records, CDRs), each into adjacent location vectors. As before, the Encoder unit 2 may consist of BiLSTM layers for each of the adjacent locations.

Outputs from the Encoder unit 1 and Encoder unit 2 may be input into a concatenation layer 720. For example, the output of the Encoder unit 1 may be a forecast location vector. The output of the Encoder unit 2 may be adjacent location vectors for each of the adjacent cells. The adjacent cell vectors may be combined, using, for example concatenation, into a concatenated location vector. The concatenated location vector may be input into a sequence of two multilayer perceptron layers, the output of a first multilayer perceptron layer being input into a second multilayer perceptron layer. The second multilayer perceptron layer may out a combined adjacent location vector.

The concatenation layer 720 may further compose the forecast location vector and combined adjacent location vector into a final combined vector. That is, the concatenation layer may concatenate the forecast location vector and combined adjacent location vector into a final latent vector.

In an example where consecutive multi-step time-series are forecast by the model, the final latent vector may be input into a repeat operation unit (not shown), for example, the repeat operation discussed in relation to Figure 6. The repeat operation unit may repeat the input vector a number r times. For example, the number of repeats may depend on the number of time-steps the model is to forecast.

The final latent vector (or final latent vectors if a repeat operation is used) may be input into a self-attention unit 730. For example, the self-attention mechanism may be the self-attention mechanism discussed in relation to Figure 6. The self-attention mechanism may be employed to facilitate and enhance the multi-variate time-series forecast in the final output. For example, the self-attention layer may be used to evaluate the importance of the features computed in the preceding stages by utilizing learned attention weights and may enhance correlation features from Encoder unit 1 to enhance the Encoder unit 2 output. In an example with repeat vectors, each repeat vector may be input into a self-attention mechanism in the self-attention unit.

The output from the self-attention unit may be input into a Decoder unit 740. The decoder unit may include a neural network (which may be referred to as an output neural network) and a Time distributed wrapper, as described above. The neural network may be a BiLSTM neural network as in Figure 6. The decoder unit may decode the final combined vector to generate a forecast from the dataset for the forecast location. Hence, the decoding unit may perform the steps of training the neural network based on the determined time series sequence length to encode the final combined vector, and inputting each hidden layer of the trained neural network into a time distributed dense layer to generate an output, the output from the time distributed dense layer being the forecast 750a, 750b. As above, the decoder unit may consist of bi-directional LSTM models to forecast call data records (CDRs) of a central cell $C_0$ at a time t+1 and t+2.

In an example where a repeat vector is used, the decoding unit may output multiple time-step forecasts (or predictions). For example, a first output 750a may be a forecast containing call data records for the forecast location at a time t+1. A second output 750b may be a forecast containing call data records for the forecast location at a time t+2.

The inventors evaluated the effectiveness of the neural network against other known methods for forecasting. The inventors utilized two baseline models for comparison purposes. To ensure accurate reproduction of the baseline results, the methodologies outlined in C. Zhang, H. Zhang, D. Yuan, and M. Zhang, "Citywide cellular traffic Prediction based on densely connected convolutional neural networks," IEEE Communications Letters, vol. 22, no. 8, pp. 1656-1659, 2018, and M. Mohseni, S. Nikan, and A. Shami, "Ai-based traffic forecasting in 5g network," in 2022 IEEE Canadian Conference on Electrical and Computer Engineering (CCECE). IEEE, 2022, pp. 188-192were thoroughly reviewed and the inventors followed the same experimental procedures. The subsequent sections provide further details on the inventors' approach.

Spatiotemporal baseline: An LSTM, RNN and Perceptron based model is considered (also represented by AR-LSTM based model by Mohseni et al. The work reported in Mohseni et al, considered the model disclosed therein as a baseline for spatiotemporal forecasting, to reproduce the finding by Mohseni et al, for evaluation purposes, the inventors also used the same architecture and settings, during the entire experiment.

2D-ConvLSTM: The 2D-ConvLSTM framework comprises four layers of 2D Convolutional LSTM and one 3D convolutional layer. It takes input data with a shape of (24, 100, 100, 4) to perform multivariate analysis. To reproduces the model 2D-ConvLSTM model, the inventors followed the settings outlined by Mohseni et al for all their experiments. The inventors used the reproduced model with the Milan dataset to produce a 'like-for-like' comparison. Each grid in the Milan dataset consists of 1487 records after resampling over a one-hour period. In line with Mohseni et al, the authors allocated 70% (1040 records) of the dataset to the training set, 20% (298 records) to the validation set, and the remaining 10% (149 records) to the test set for each grid. Two separate experiments were conducted to demonstrate the effectiveness of the system disclosed herein.

*Experiment-1:* In contrast to Mohseni et al, the inventors' experimental setup involved training their model on 80% of the available data and testing it on the remaining 20%. To prevent overfitting and optimize model performance, the inventors implemented early stopping based on Mean Absolute Error (MAE). The training progress was monitored, and the process was halted if the MAE improvement was less than or equal to 0.01 for five consecutive epochs. The last saved model was chosen as the final model. In this example, in the testing phase, the inventors employed a rolling-based forecasting approach to evaluate the system disclosed herein against the baseline models. This involved using a sliding window technique to forecast data for each day. Starting with a 5-time step history, the inventors predicted the next two time steps. The inventors then appended the forecasted data to the previous 3-time step history and repeated the process until the entire 24-hour period was forecasted. The resulting forecasted data was stored separately. Finally, as Mohseni et al did not explicitly discloses the method in which missing data was imputed, the inventors used the last 5 hours of the forecasted data for day- 1 to fill in any gaps in the given 24-hour data for day-1. Using this modified data, the inventors proceeded to forecast data for day-2 using the same sliding window approach. This process continued for subsequent days from 21$^{st}$ December to 1$^{st}$ January, which constituted the test data, comprising 20% of the total timeframe.

TABLE I: Comparison of the normalized mean absolute error and mean execution time of our system when compared against other baselines.

| Traffic | Model | MAE | Execution Time (Seconds) |
|---|---|---|---|
| Internet | Spatiotemporal baseline | 0.685369 | 10.15 |
| | 2D-ConvLSTM | 0.353892 | 4419.16 |
| | Our System | **0.099397** | 113.17* |
| SMS | Spatiotemporal baseline | 0.161275 | 6.89 |
| | 2D-ConvLSTM | 0.096778 | 2821.77 |
| | Our System | **0.069223** | 113.17* |
| Call | Spatiotemporal baseline | 0.102214 | 12.87 |
| | 2D-ConvLSTM | 0.060268 | 3406.08 |
| | Our System | **0.057391** | 113.17* |

*Experiment-2:* The Inventors further tested the model disclosed herein in a second experiment. The inventors' model may employ a smaller input and output time step sizes of 5 and 2 respectively in the multivariate setting. This allows it to predict 2 output time steps by using 5 input time steps for any given cell and time. That is, the longest time series sequence length may be split into training and test data. For example, as described in connection with Figure 5, the inventors identified a longest time series sequence length as 7 hours. To assess the model's performance, the inventors selected all the time series sequences of length 7 from the 20% test data and used the initial 5 time steps as input for the model. The model then generated multivariate outputs for the next two time steps. The inventors conducted this experiment for both the November month data and the entire dataset. Initially, the data had 35% missing values. In the next experiment, an additional 5% of data was randomly removed from the training set while maintaining the same time step sizes as in the case of 35% missing data. After this adjustment, the coverage of the time series sequences identified by the inventors for one month data was 49.78% (compared to 53.97% with 35% missing data), and for the entire dataset, it was 48.31% (compared to 52.17% with 35% missing data). The inventors repeated this process three times and calculated the average results. The outcomes of this experiment are summarized in Table II.

TABLE II: The table demonstrates the consistent forecasting effectiveness of the system across various cells and time intervals.

| Feature | MAE for one-month data (Normalized) | | MAE for the entire data (Normalized) | |
|---|---|---|---|---|
| | 35% missing data | 40% missing data | 35% missing data | 40% missing data |
| Internet | 0.037652 | 0.041003 | 0.043506 | 0.061931 |
| SMS-IN | 0.048186 | 0.049901 | 0.055074 | 0.070071 |
| SMS-Out | 0.028438 | 0.033719 | 0.031369 | 0.066181 |
| Call-IN | 0.029340 | 0.041859 | 0.031724 | 0.052913 |
| Call-Out | 0.021108 | 0.044917 | 0.022944 | 0.043971 |

The inventors' analysis of the results shows that the system developed by the inventors outperforms the existing state-of-the-art based on the data presented in Table I. The inventors' system may be multi-variate and the reported value of 113.17* represents the time taken to load the model and forecast all five features (Internet, SMS-IN, SMS-Out, Call-IN, and Call-Out). In line with Zhang et al, Mohseni et al, the inventors combined the forecasts for SMS-IN and SMS-Out to SMS, and Call-IN and Call-Out to Call. Further, Table II provides evidence of the effectiveness of the system disclosed herein in forecasting results for any cell and time interval, with consistent results regardless of the specific time and cell. However, the overall mean absolute error (MAE) score for the entire dataset is slightly lower. This could be due to the fact that the last 20% of the dataset includes significant events and holidays, such as year-end celebrations and the New Year, which were not present during the training phase. These results demonstrate that the system disclosed herein performs well in a variety of settings and can effectively forecast multiple features simultaneously. Furthermore, the model has the potential to be used in real-world applications where forecasting accuracy is crucial.

In conclusion, the model disclosed herein introduces a novel approach for addressing missing data in multi-step, multi-variate, and spatiotemporal time series forecasting without relying on data imputation techniques. Instead, the inventors propose identifying LCCFS based time step sequences that frequently occur in the dataset. Additionally, in an example the inventors' leverage spatial and local features by analyzing the impact of changes in neighbouring cells on the target cell using separate Bidirectional Long Short-Term Memory (BiLSTM) networks. By concatenating the BiLSTM outputs and applying self-attention, the influence of neighbouring cells on the target cell was assessed. In an example, the approach disclosed herein also incorporates a Repeat vector, BiLSTM network, and Time distributed dense layer for achieving multi-step and multivariate forecasting.

**Figure 8** shows another example 800 of a training flow of a neural network for accurate multi-variate time-series forecasting. In this example more than one neural network model may be trained for forecasting input data. For example, as shown, three models 810a, 810b, 810c may be trained using the input data 805 and the output of the models may be combined 815 for forecasting. In this example, as before, the inventors used the Milan data set to train the neural network models. Of course, any suitable dataset may be used.

Each of the models, model 1 810a, model 2, 810b, model 3 810c, may consists of the same, or substantially the same architecture as the neural network model described in relation to Figure 4, 6 and 7 above. That is, each of the models 1-3 may be split into three notional modules and consists of Bi-LSTM layers, concatenation layers, repeat vectors, self-attention layers, further Bi-LSTM layers and a timedistributed wrapper, as described above.

The three models may be trained in substantially the same way as the one neural network model described above. However, for each of the three models, a different time-series sequence lengths may be used to train the model. For example, as described above the longest common continuous frequent sequence algorithm may be used to determine a longest time-series sequence length of the dataset. The longest time-series sequence length may be used to train model 1. A shorter time-series sequence length may be determined. The shorter time-series length may be the next longest time series sequence length determined using the LCCFS algorithm. The shorter time-series sequence length may then be used to train model 2. A third longest time-series sequence length may be determined which then may be used to train model 3.

As discussed above, the inventors determined that, in the Milan dataset, the longest time series sequence length of the dataset was 7 hours. The second highest time series sequence length was 6 hours, and the third highest was 5 hours. Of course, with a different dataset, the LCCFS algorithm may determine a different longest time-series sequence length. As before, for the 7 hours sequence, the inventors used the initial five time series steps for training and the subsequent two continuous sequences for forecasting. For the 6 hours, the first 4 sequences were used for training and the last 2 for forecasting and for the 5 hours the first 3 sequences were used for training and the last 2 for forecasting. In this example, the inventors used the dataset to forecast the next 2 time series. Of course, if a different number of time-series is to be forecast the time series sequence may be partitioned differently. That is, for example, if the model were to predict the next 3 time series the longest time series in the example, 7 hours, may be partitioned to use the first 4 hours for training and the next 3 hours for forecasting.

Thus, in this example, a proposed method for training the model may be: inputting a dataset into the model for training. The dataset may be input from a forecast location and one or more adjacent locations. In this example the dataset comprises spatio-temporal characteristics of each location and multivariate data recorded at each location. The spatiotemporal characteristics of the network coverage area may be input data such as cell location and time of day. Furthermore, the input into the forecasting model may include historical call data records (CDRs) for various network services (e.g., internet, calls, text messages) recorded at different timestamps.

In this example, the one or more adjacent locations comprised 8 adjacent cells, or nearest neighbours, to a forecast location (or central cell). Hence, the model may take as an input the features of the central cell, C0, and the adjacent cells (C1-C8) features. The inventors found by using the one or more adjacent locations along with the forecast location, the forecast for the central location may be improved as the model takes into account the spatial influence of adjacent cells on the central cell. For example, this may be achieved by combing the features of the central cell and adjacent cells and processing them further through an attention layer. As a result, the forecast made for the central cell is influence by the information from its adjacent cell.

Considering for each of models 1 810a, model 2 and model 3, a functional block which is the same, or substantially the same the functional block diagram given in Figure 7 above, an encoder for each model may consist of a bi-directional stack of LSTM networks that take in the CDRs (call data records) of the central cell and neighbouring cells, along with the spatio-temporal characteristics. The features may be passed through a self-attention layer to form a latent vector.

For each of the models, a decoder side of the model may have a sequence of bi-directional LSTM networks that take in the latent representations to predict CDRs for the central cell (C0) at time t+1 and t+2.

Three encoder-decoder models may be trained to address missing data problems. For example, as discussed above each model may be trained using a time series sequence length determined using a LCCFS algorithm. In this example, each model accepts a sequence lengths of time series 3, 4, 5, calculated via the LCCFS algorithm. The inventors found that the model trained using the longer time-series had more discriminative power to understand temporal variations, while the model with time series length the shortest time series length (in this case a time-series length of 3 hours) had been trained on more samples to associate variable sequence patterns.

In the training phase the inventors combined the three models for generating a forecast from the input dataset. The inventors took an ensemble 815 of the three models. For example, the ensemble may be a weighted average ensemble determined using a grid search method. As an example, the grid search method used by the inventors gave a weighting to model 1 of 0.58, a weighting to model 2 or 0.26 and a weighting to model 3 of 0.13. Hence, the final time-series predictions may be an ensemble of the three models, weighted accordingly. In the ensemble of models, the process of performing model decision averaging may involve combing the predictions of multiple models by calculating the average of their individual predictions.

In this example a system is proposed which leverages 5G spatiotemporal multivariate data with missing information by employing a novel approach. The system uses three shorter time series sequences (with, in this example, step lengths of 5, 4, and 3, (i.e., consecutive time-series) where these steps lengths are estimated via a LCCFS algorithm) as input and a forecast step length of 2 as the output. The proposed system consists of three shallow graph-type neural network architecture to learn patterns in the data, each focusing on specific time series sequence lengths. While the longer sequences capture variation of patterns, they are less in number due to missing records. On the other hand, shorter sequences are more in number and help to identify deviations or explore the depth of each feature. By incorporating an ensemble-based mechanism, the system combines insights from multiple architectures to make accurate predictions and provide forecasts for multiple variables and future time steps.

In this example the inventors trained three models using the three different length time series determined using an LCCFS algorithm. The inventors used the minimum odd number of models for ensembling as a design choice - trade off between effective ensembling and minimal computation overhead. However, of course, a different number of models may be trained using the time-series data. For example, one model, or two models or more may be used.

The inventors found the forecasting method encompassed a multipurpose method-capable of complex spatiotemporal, multivariate and multistep time series forecasting for 5G traffic, resource requirements in both cases- (a) in the case of a huge amount of missing data (e.g., 35% missing data) and (b) in a normal case (without any unsupervised data imputation strategy. The inventors found that an effect of the proposed training method and system was that the need for any supervised or unsupervised data imputation strategies were eliminated. Furthermore, the training method disclosed herein showed a better accuracy with respect to traditional systems, and worked with the complex cases of missing data and normal data (having no missing records).

The ensemble of models may be trained using, for example, a mean absolute error as the loss function. As described above, the complete system may comprise three (identical models), trained on Bi-LSTM architecture, which take sequences of varying lengths as input. The final output may be obtained by averaging these models using a weighted ensemble.

In this example each of the models were separately trained using an input sequence length computed using the LCCFS algorithm. In the training phase, each model is independently trained and optimized using mean absolute error (MAE) as the loss function. The MAE loss function mas be defined by:

$$MAE = \frac{1}{n}\sum_{i=1}^{n}\left|Y_i - \widehat{Y}_i\right| \quad (16)$$

as before. Hence, during the training process of each model, the mean absolute error (MAE) may be determined by calculating the average absolute difference between the predicted model outputs ($\hat{Y}_i$) and the actual output values $Y_i$ for each of the "i" training examples across a total of n training samples. The MAE loss that is computed may be back-propagated and the weights of the model optimized through an ADAM based optimizer based on stochastic gradient descent.

After the three models were optimized, the final weighted ensemble averaging may be computed for the final prediction of the system, where the weights of the ensemble may be computed through a grid search. In this example, a back propagation method using an ADAM optimizer was used to train each model, however, any backpropagation may be used. Furthermore, each model was trained using backpropagation and then combined in an ensemble but of course these steps may be switched such that an ensemble is determined then backpropagated.

Hence, the proposed system and method may automatically handle the data insufficient issues caused by irregular or missing records in spatiotemporal, muti-step, multivariate, 5G forecasting for network resource partitioning, and traffic forecasting. The system may address the missing data issue by using an ensemble of three shallow neural network architectures. These networks take time series sequences of longer and shorter lengths capturing the variations in time series data. The method overcomes the need of any data imputation techniques which often introduce a significant amount of noise to the data.

**Figure 9** shows a flow chart 900 for training an ensemble of models for forecasting, for example, the ensemble of models discussed in connection with Figure 8 above. In an input step S910, a dataset from the forecast location and one or more adjacent locations may be input. The dataset may comprise spatio-temporal characteristics of each location and multivariate data recorded at each location. For example, the inventors used the Milan dataset as described above.

In a step S920, the dataset may be pre-processed by selecting the longest time-series sequence lengths to use with the models. In this example, three models were trained on different sequence lengths, hence three sequence lengths were determined from the data. A longest Common Continuous Frequent Sequence (LCCFS) algorithm was used to identify the optimum time series step-size.

Instead of focusing on very-high step sizes (and imputing missing data, as in known teachings), the inventors focused on smaller time-step sizes. By doing so, patterns for two different aspects of time-series data may be collected. For this, the inventors applied strategies to select the three optimal time-step sizes.

Considering, for example, a dataset with 30%+ missing data, a step may involve trying to find any number (representing the time-step size) which is near to (>30% of total time interval scale) and which captures the maximum number (>50%) of the data records. A detailed description of the LCCFS method is given in connection with Figure 5.

A further step may involve identifying two continuous lower time-step size, which captures more than, a second threshold of complete data records, for example the inventors used a 60% threshold of the records. In the Milan dataset, the division of time steps as 24 hours for one day was considered and a 1 hour scale was used. In the case of the Milan dataset a total of 30%+ data was missing.

Based on the above rule, the inventors identified 7-hours as a first time series step size, which captures more than 50% of the total record counts. Then, 6-hours and 5 hours- were selected as the next two time series step-sizes (the next longest time series step sizes which satisfied the above rules).

The inventors found the following benefits with the time-series step sizes selected using the above method. The higher time-step length records capture the breadth of the time-series patterns while the lower time-step lengths records (which are more numerous) capture the depths of the time-series patterns.

In the step S920 further preprocessing of the data may occur. For example, based on the three identified time steps, the data may be organized into a format suitable for input into the forecasting model. In this step the dataset may be prepared so that (each) central cell C0 with the additional 6 features and the 8 neighbouring cells C1-C8 with the 5 features each are prepared for all the sequence length. For example, each are prepared into a data feeding pipeline.

In a step S930, the pre-processed data may be input into each of a model 1, a model 2 and a model 3. Each of the models may be the same or substantially the same as the models described in relation to Figure 8 above. Each model may be trained on the same data but using a different time-series step size. For example, model 1 may be trained using the 7 hour series length, model 2 using the 6 hour series length and model 3 using the 5 hour series length.

For each of the three models, the training steps described in relation to Figures 4, 6 and 7 may be repeated using the different time-series step sizes. Hence, for each of the models the steps of, training a forecast location neural network and the one or more adjacent location neural networks, combining one or more adjacent location vectors into a combined adjacent location vector, composing the forecast location vector and combined adjacent location vector into a final combined vector and decoding the final combined vector to generate a forecast from the dataset for the forecast location, may be repeated.

In a step S940, an ensemble of the three models may be taken. For example, a weighted average ensemble of the system may be taken. The ensemble may be taken once the models have been trained. The models may be trained using, for example, backpropagation. The weights may be determined using a grid search system. Of course, any method to determine weights for the ensemble may be used. In the example using the Milan dataset, the inventors found that a weights ensemble with the weightings for model 1 as 0.58, model 2 as 0.29 and model 3 as 0.13, produced optimum forecasts. If another dataset was used, the weighting may of course be different. Furthermore, the inventors trained three models and took an ensemble of the three models. However, the skilled person would understand that more or fewer than 3 models may be trained.

A step S950 shows a step with a trained neural network model (or system) comprising the three trained models, with ensemble weights. Each of the three models, trained with different time-series step sizes, may be optimised using backpropagation techniques such as an ADAM based optimizer based on stochastic gradient descent. As described in connection with Figure 8, each of the three models' architectures may comprise Bi-LSTM neural networks.

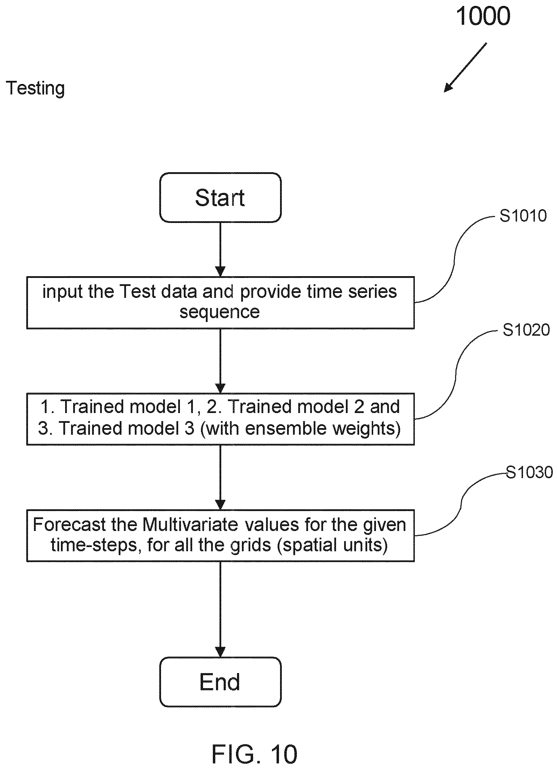

**Figure 10** shows a test stage flow chart for a forecasting method comprising three neural network models, for example the neural network models described in Figures 8 and 9. Although in this example a test stage is shown, the steps may equally apply to an implementation stage. The test stage may differ from an implementation stage in that the test stage may include a further step of comparing the forecasted data to test data and determining a mean absolute error.

In an input step s1010, a method for forecasting multivariate data in a forecast location in a network may comprise inputting a dataset from the forecast location and one or more adjacent locations, the dataset comprising spatio-temporal characteristics of each location and multivariate data recorded at each location.

The input step S1010 may further comprise providing a longest time-series sequence length of the dataset, the time-series sequence length indicating a total length of consecutive time steps with complete data in the dataset, an occurrence frequency of the longest time-series sequence lengths appearing in the dataset being higher than a threshold number of the dataset. As before, the inventors used the Milan dataset and partitioned the timeseries data into 5 hours for training and 2 hours for testing for the 7 hour time series, 4 hours and 2 hours for the 6 hour time series and 3 hours and 2 hours for the 5 hour time series.

An implementation step S1020 may comprise using a pretrained forecast location neural network based on the time series sequence length to encode the multivariate data from the forecast location into a forecast location vector, and using, for each of the one or more adjacent locations, a pretrained adjacent location neural network based on the time series sequence length to encode the multivariate data from each of the one or more adjacent locations each into an adjacent location vector. Each of the pretrained models, model 1, model 2 and model 3 may use a different time series sequency length. Although in this example three models are described, the skilled person would understand that more or fewer than three models may be used. That is, a single pretrained model consisting of a pretrained forecast location neural network and one or more pretrained adjacent location neural networks may be used, or two models, of four or five models, for example.

The implementation step S1020 may further comprise, for each of the models 1, 2 and 3, combining the one or more adjacent location vectors into a combined adjacent location vector and composing the forecast location vector and combined adjacent location vector into a final combined vector. The skilled person would understand that in an example with one adjacent location vectors, the combing step may involve transforming the one adjacent location into a final combined vector. For example, the combining step may comprise the steps of concatenating the one or more adjacent location vectors into a concatenated location vector; and inputting the concatenated location vector into a sequence of two multilayer perceptron layers, the output of a first multilayer perceptron layer being input into a second multilayer perceptron layer. Hence, with one adjacent location, the combing step may comprise inputting the adjacent location vector into the multilayer perceptron layers.

In a decoding step S1030 the final combined vector may be decoded to generate a forecast from the dataset for the forecast location. In an example for generating a forecast from multivariate data in a network, a forecast may be generated for each cell, or node, or location in that network. That is, each cell in that network may be assigned as the central cell and a forecast generated for the cell using that cell's neighbouring (or adjacent cells). Hence, the method for forecasting multivariate data in a forecast location in a network may comprise forecasting multivariate values for a given time-steps for all grids (spatial units) in that network.

As described above, in relation to a single model, an MAE may also be calculated in the testing phase to determine the accuracy of the model. The inventors also compared the accuracy of the ensemble of neural networks for forecasting the multivariate data.

TABLE III: Comparative Results - some nearest baselines (All averaged MAE)

| | **Models** | **MAE (Test)** | **MAE (training)** |
|---|---|---|---|
| 1 | Baseline Model [Ref-1] | 0.39 | N/A |
| 2 | FCSN [Ref-1] | 0.29 | N/A |
| 3 | 1D-CNN [Ref-1] | 0.29 | N/A |
| 4 | SS -LSTM [Ref-1] | 0.32 | N/A |
| 5 | AR- LSTM [Ref-1] | 0.32 | N/A |
| 6 | **Model disclosed herein** | **0.08984** | **0.03291** |

Table III shows a comparison of the MAE of the model proposed by the inventors against known models in the art. The known models are disclosed in Ref-1: Mohseni, M., Nikan, S., & Shami, A. (published on 2022, September). AI-based Traffic Forecasting in 5G network. In 2022 IEEE Canadian Conference on Electrical and Computer Engineering (CCECE) (pp. 188-192). IEEE.

As shown in Table III, the training method and model proposed by the inventors had a much improved MAE (of 0.08984) compared with the methods known in the art. The inventors further compared their proposed model with spatiotemporal baselines as shown in Table IV below. Across all of the Call data records (internet, SMS and Calls) the inventors found the method disclosed herein generated a lower MAE than the methods known ion the art, and therefore generated more accurate forecasts.

In both the proposed method and the methods known in the art, the Milan dataset was used. A total of 62 days of data was available. The data is divided into 1440 minutes of data per day for 10K grids (i.e., 10 thousand cells in a network). So, the total size of the data is (62 x 1440 x 10000). The dataset contains a lot of missing data, and outliers. The current data (used by the inventors) contained 35% missing data. The Ref-1 cited above used 80% of the starting data for training and the next 20% of the data for testing. Hence, the inventors used the same partitioning of data in this example.

TABLE IV: Comparative results with Spatiotemporal Baselines.

| **Traffic** | **Model** | **MAE Entire data** | **MAE - 1 month data (November- Month)** |
|---|---|---|---|
| Internet | Spatiotemporal baseline (Used by Ref-1) | 1.02 | N/A |
| | 2D-ConvLSTM (used by Ref-1) | 0.53 | N/A |
| | **System disclosed herein** | **0.211** | **0.0376521** |
| SMS | Spatiotemporal baseline (Used by Ref-1) | 0.24 | N/A |
| | 2D-ConvLSTM (used by Ref-1) | 0.14 | N/A |
| | System disclosed herein (Calculated as average MAE of SMS-In (0.081), and SMS-Out (0.0817)) | **0.0814** | **SMS-IN (0.0481860)**<br>**SMS-OUT(0.0284381)**<br>**AVG (0.0383120)** |
| Call | Spatiotemporal baseline (Used by Ref-1) | 0.15 | N/A |

(continued)

| Traffic | Model | MAE Entire data | MAE - 1 month data (November- Month) |
|---|---|---|---|
| | 2D-ConvLSTM (used by Ref-1) | **0.08** | N/A |
| | System disclosed herein (calculated as average MAE of Call-In (0.040) and Call-Out (0.0355)) | 0.0377 | Call-IN *(0.0293402)*<br>Call-Out *(0.0241081)*<br>AVG (0.026724) |

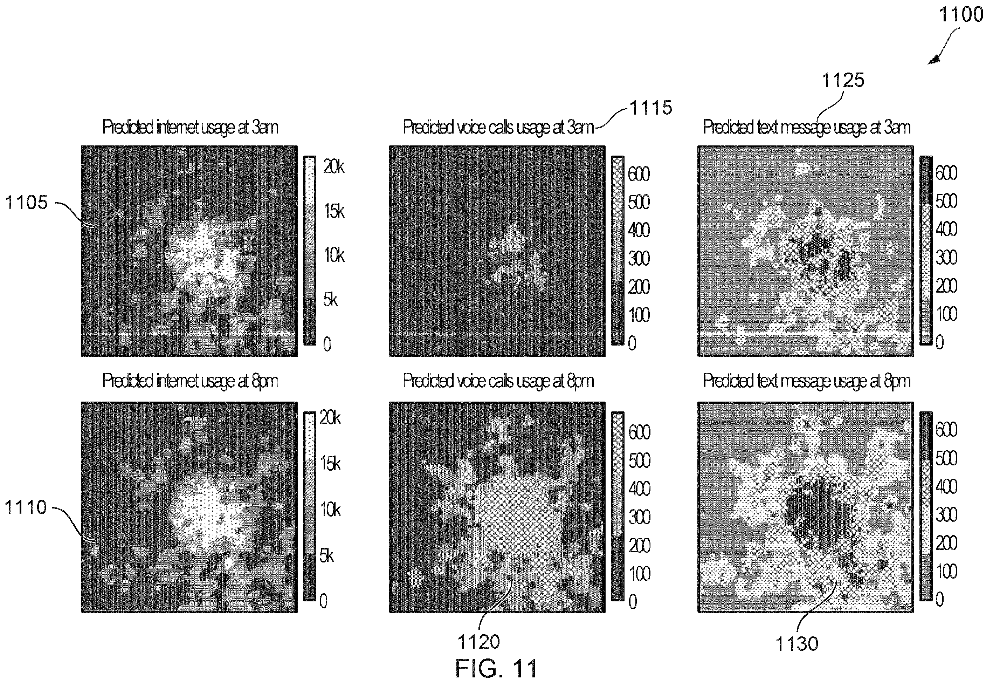

**Figure 11** shows example forecasts generated using the forecasting method. In this example the forecasts were generated using a weighted ensemble of three neural network models. The neural network models comprised BiLSTM neural networks, as described above. The examples show entire predictions maps based on the proposed forecasting model for the city of Milan. The examples show the difference in forecasting at 3am and 8pm for network services such as internet, calls and text messages.

A comparison between predicted internet usage at 3am 1105 and predicted internet usage at 8pm 1110 is shown in Figure 11. The figures show a visual representation of internet usage in the city of Milan. The key shows the number of people using the internet for each location in the network at that time. A person is deemed to be using the internet at the time is the internet was used for more than 15 minutes or there was more than 5mb of internet usage. As illustrated in the figures, there was a higher forecast internet usage at 8pm than at 3am.

Figure 11 also shows predicted voice call usage at 3am 1115, predicted voice call usage at 8pm 1120, predicted text message usage at 3am 1125 and predicted text message usage at 8pm 1130. As with the internet usage figures, it is evident that the predicted usage is higher at 8pm than at 3am. The key for the predicted voice call usage shows number of calls during that hour and the key for the predicted text message usage shows number of text message send (and/or received) during that hour. As discussed previously, the inventors used normalised values for the call data records when training the neural networks. Thus, to retrieve absolute values for each data record, the inventors assumed an average population density in each location and multiplied the normalised value by the average density.

The forecast generated using the methods described herein may be used in multiple application areas. Application areas concerning the potential use of the proposed robust forecasting model and source of missing data in each of such applications are described in detail below.

Predictive maintenance: In 5G networks, equipment and infrastructure require continuous monitoring to identify potential faults or failures. Multivariate time series forecast can be built to identify areas where the network service can potentially breakdown resulting in complete network outage or failure. The forecast data in this case typically consist of information related to sensor readings, network performance metrics, and other quality of service parameters. Here missing data records can result from faulty sensors, intermittent connectivity, or device malfunctions.

Network performance analysis: As modern networks generate vast amounts of multivariate time series data related to network performance metrics such as signal strength, latency, throughput, and quality of service. Forecasting models may be employed to identify network performance bottlenecks or may be utilized to effectively optimize the network infrastructure. The type of data that are involved in forecast models includes various network performance metrics such as signal strength, latency, throughput, and quality of service. Missing data can occur due to network congestion, signal interference, or technical issues.

Resource management and optimization: Efficient resource management is essential in 5G network to ensure optimal utilization of network resources, such as bandwidth allocation including network slicing, frequency allocation, and power control. The forecasted data consist of various network service usage features such as internet usage, voice call/text messaging traffic or data such as net power usage in each network grid. Multi-variate time series data with spatial information is collected to monitor resource usage and network capacity. An efficient forecasting system may be utilized to plan such resource management. The reason more missing records are manifold in this case, including network monitoring and measurement issues, sensor instrumentation failures, data transmission and communication errors, sampling and reporting processes, data preprocessing and filtering techniques, as well as due to privacy and security reasons (intentional masking of data). Thus, a forecast generated using the method disclosed herein may automatically bring more cells or nodes into action in a network during busy or high demand periods or turn cells or nodes off during quiet periods.

User experience management: Ensuring a high-quality user experience is a critical objective in modern networks like 5G. Multi-variate time series forecasting can be used to avoid deterioration in user experience metrics such as data rate, signal coverage, and call quality. Due to user mobility, network handovers, or temporary signal loss can result in data to be missed in record.

Network security and anomaly detection: communication networks face security threats and vulnerabilities that require continuous monitoring. Multivariate time series data with spatial information can be analysed to detect network anomalies, abnormal traffic patterns, or potential security breaches. Missing data can occur in such applications due to network attacks, packet loss, or data filtering mechanisms.

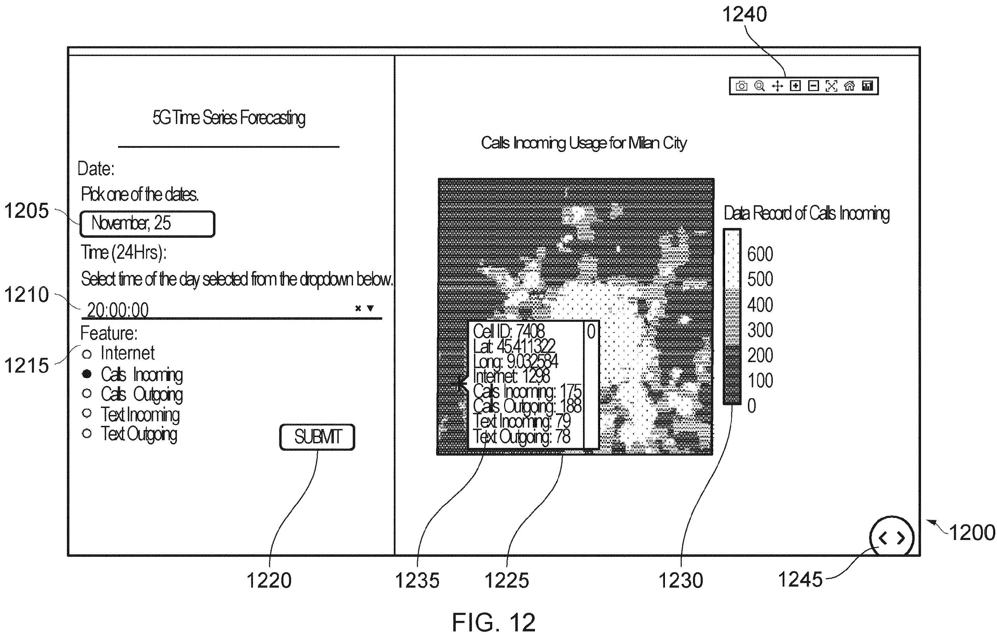

**Figure 12** shows a graphical user interface (GUI) 1200 which a user may interact with to generate a forecast for a forecast location. A user may interact with the GUI to specify a desired date for forecasting. For example, the GUI may present the user with a user panel comprising an input text box 1205 which a user may enter the date. Furthermore, the user may select a time of day for the forecast from a dropdown box 1210. As shown in the figure, the time of day may be given in hour intervals (20:00:00 is shown in Figure 12). As the forecasting model was trained on a time series sequence consisting of 1 hour steps, the model may forecast in 1 hour intervals. However, the skilled person would understand that the model may be trained on different time steps and therefore forecast in other time steps, such as 10 minutes forecasts or 30 minutes forecasts or 2 hours and so on. Furthermore, the model may interpolate the data to generate forecasts at any time.

As shown in Figure 12, a user may also select a feature they desire to be forecast from a feature menu 1215. In this example, the model was trained on multivariate data from the Milan dataset and hence the available features are Internet, calls incoming, calls outgoing, text incoming and text outgoing. Of course, if a different dataset were to be used the selectable features may be different.

A user may enter their selection of the date, time and feature by clicking a select button 1220. The select button may instruct the model to generate a forecast for the entered features. In this example, calls incoming has been selected and a call incoming forecast 1225 has been generated. The GUI may also generate a key for the forecast. For example, the key may show the number of data records of calls incoming. In this example, the key ranges from 0 calls to over 600 calls for each forecast location. Each pixel in the forecast may represent a different forecast location and hence may be assigned a different colour shown in the key. The inventors used normalised values for each feature in the multivariate data to train the model(s). Hence, to obtain the absolute values shown in the key, the inventors assumed an average population density at each forecast location and multiplied the forecast value for each location by the average density. If absolute values were used to train the models, then there may not be a need to multiply by the average density.

Each of the pixels in the generated forecast may represent a forecast location. That is, the GUI for the forecasting system may allow a user to input a data and time for the forecast and the entire forecast for, in this example, the city of Milan may then be displayed. A user may hover over or click on a pixel in the forecast and a pop-up information box 1235 may display forecast information for that pixel (or location). In this example, 5G network usage in Milan is shown. Hence, each pixel represents the network coverage area of a single cell in the network. The pop-up box may present the user with the cell ID (shown as Cell 7408 in Figure 12), the cells Latitude (45.511322), the cells longitude (9.032584), the cells internet usage (1298), the cells calls incoming (175), the cells calls outgoing (188), the cells text incoming (79) and the cells text outgoing (78). In this example, a 5G network is considered but, of course, if a different network or system is used the pop-up box may contain different features. That is, instead of a cell ID, a node ID may be displayed, for example.

The GUI may include additional buttons 1240 a user may interact with. For example, starting from left to right, the additional buttons may include: a camera button which downloads the forecast image, as for example, a PNG image; a magnifying button which zooms in on the forecast to a present zoom level, a panning button which allows the users to pan around the image, a plus button which allows the user to further zoom on the image, a minus button which allows the user to zoom out of the image, a scale button which auto scales the forecast image and a home button which restores the original forecast image. The GUI may also have a share button 1245 which allows a user to share the forecast with other users.

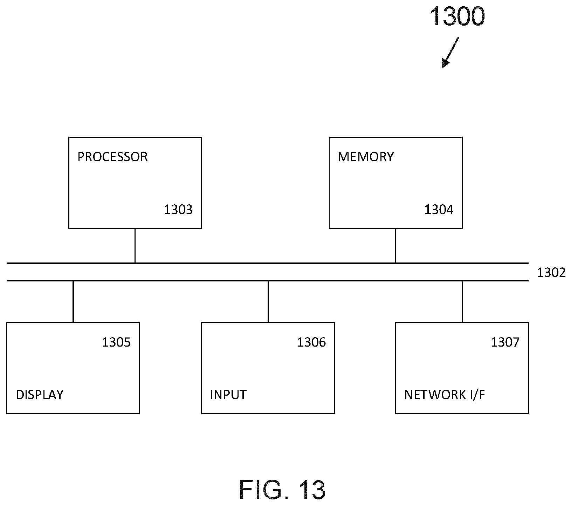

**Figure 13** is a block diagram of an information processing apparatus 1300 or a computing device 1300, such as a data storage server, which embodies the present invention, and which may be used to implement some or all of the operations of a method embodying the present invention, and perform some or all of the tasks of apparatus of an embodiment. The computing device 1300 may be used to implement any of the method steps described above, e.g. any of steps S10-S70 or S910 - S950 or S1010-S1030 for example.

The computing device 1300 comprises a processor 1303 and memory 1304. Optionally, the computing device also includes a network interface 1307 for communication with other such computing devices, for example with other computing devices of invention embodiments. Optionally, the computing device also includes one or more input mechanisms such as keyboard and mouse 1306, and a display unit such as one or more monitors 1305. These elements may facilitate user interaction. The components are connectable to one another via a bus 1302.

The memory 1304 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps disclosed herein, for example any of steps S10-S70. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 1303 is configured to control the computing device and execute processing operations, for example executing computer program code stored in the memory 1304 to implement any of the method steps described herein. The memory 1304 stores data being read and written by the processor 1303 and may store at least one neural network model and/or at least one encoder and/or at least one decoder unit and/or other data, described above, and/or programs for executing any of the method steps described above. These entities may be in the form of code blocks which are called when required and executed in a processor.

As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 1303 may be considered to comprise any of the units described above. Any operations described as being implemented by a unit may be implemented as a method by a computer and e.g. by the processor 1303.

For training the model described herein, the inventors used 1 Nvidia A30 GPU with 24GB RAM. The processor used was an IntelI XeonI Silver 4314 CPU with 256GB RAM. Inferences were performed on the same system. The inventors also successfully tested the model in a CPU based system with IntelI CoreI i5 processor with at least 32GB RAM, preferably with 16GB GPU for accelerated training/testing. The inventors found that a recommended minimum hardware requirements for the system disclosed herein for training/testing may require an intel i5 processor with at least 32GB RAM, preferably with 16GB GPU for accelerated training/testing.

The display unit 1305 may display a representation of data stored and/or generated by the computing device, such as a generated image and/or GUI windows (such as the GUI shown in Figure 12) and/or interactive representations enabling a user to interact with the apparatus 1300 by e.g. selection interaction, input text boxes, and/or any other output described above, and may also display a cursor and dialog boxes and screens enabling interaction between a user and the programs and data stored on the computing device. The input mechanisms 1306 may enable a user to input data and instructions to the computing device, such as enabling a user to input any user input described above. For example, the display unit may display a GUI including a User panel for the user to interact with as described herein. The user may select a date for a forecast along with a forecast hour and a feature. The user may interact with the GUI and display to generate and view a forecast for a network.

The network interface (network I/F) 1307 may be connected to a network, such as the Internet, and is connectable to other such computing devices via the network. The network I/F 1307 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus 1300 such as that illustrated in Figure 13. Such a computing device need not have every component illustrated in Figure 13 and may be composed of a subset of those components. For example, the apparatus 1300 may comprise the processor 1303 and the memory 1304 connected to the processor 1303. Or the apparatus 1300 may comprise the processor 1303, the memory 1304 connected to the processor 1303, and the display 1305. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data. For example, the neural network model(s) or forecasting model may be stored on a separate server from other units.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

The system described herein was developed in the python programming language with Keras API (tensorflow backend). Additional libraries in python were also used such as pandas, NumPy, seaborn and plotly for data handling and visualizations. Of course, any suitable programming langue may be used.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random-access memory or both.

The essential elements of a computer are a processor for executing instructions coupled to one or more memory devices for storing instructions and data.

## Claims

**1.** A computer-implemented method for training a neural network to forecast multivariate data in a forecast location in a telecommunications network comprising:

inputting a dataset from the forecast location and one or more adjacent locations, the dataset comprising spatio-temporal characteristics of each location and multivariate data recorded at each location;
determining a longest time-series sequence length of the dataset for which an occurrence frequency of the longest time-series sequence length appearing in the dataset is higher than a threshold number of the dataset, a time-series sequence length indicating a total length of consecutive time steps with complete data in the dataset;
training a forecast location neural network based on the determined longest time-series sequence length to encode the multivariate data from the forecast location into a forecast location vector;
training for each of the one or more adjacent locations an adjacent location neural network based on the determined longest time-series sequence length to encode the multivariate data from each of the one or more adjacent locations each into an adjacent location vector;
combining the one or more adjacent location vectors into a combined adjacent location vector;
composing the forecast location vector and combined adjacent location vector into a final combined vector;
decoding the final combined vector to generate a forecast from the dataset for the forecast location.

**2.** The method according to any preceding claim, wherein the method further comprises:
determining one or more shorter time-series sequence lengths of the dataset with respect to the longest time-series sequence length;

repeating, for the one or more shorter time-series lengths, the steps of training the forecast location neural network and the one or more adjacent location neural networks, combining into a combined adjacent location vector, composing into a final combined vector, decoding to generate a forecast; and
once the neural networks are trained, determining an ensemble of the generated forecasts for each of the longest time-series sequence length and the one or more shorter time-series lengths, to generate a final forecast for the forecast location.

**3.** The method according to any preceding claim, wherein the network comprises a plurality of adjacent locations, and wherein combining one or more adjacent location vectors into a combined adjacent location vector comprises:

concatenating the adjacent location vectors into a concatenated location vector; and
inputting the concatenated location vector into a sequence of two multilayer perceptron layers, the output of a first multilayer perceptron layer being input into a second multilayer perceptron layer.

**4.** The method according to any preceding claim, wherein the composing the forecast location vector and combined adjacent location vector into the final combined vector comprises:
concatenating the forecast location vector and combined adjacent location vectors into a final latent vector.

**5.** The method according to claim 4, wherein the composing further comprises:

inputting the final latent vector into a self-attention mechanism (660a, 660b) and determining as an output the final combined vector.

**6.** The method according to any preceding claim, wherein decoding the final combined vector to generate a forecast from the dataset for the forecast location comprises:

training an output neural network based on the determined time series sequence length to encode the final combined vector; and
inputting hidden layers of the trained output neural network into a time distributed dense layer to generate an output, wherein the output from the time distributed dense layer is the forecast.

**7.** The method according to any preceding claim, wherein the longest time-series sequence length of the dataset is determined using a longest common continuous frequent sequences algorithm, LCCFS, the LCCFS algorithm comprising:

determining a number of data records in the dataset with complete data, a data record comprising multivariate data recorded at each location at each time step in the dataset;
setting the threshold number from the complete data in the dataset, wherein the threshold number is preferably set as 50% of the complete data in the dataset;
determining length and occurrence frequency for each continuous common sequence in the multivariate data, the length being a number of complete consecutive multivariate data in the dataset and the occurrence frequency being a number of times the continuous common sequence occurs in the dataset;
setting the continuous common sequence in the multivariate data with an occurrence frequency above the threshold value as the longest time-series sequence length.

**8.** The method according to any preceding claim, wherein the final combined vector is replicated using a repeat vector unit (650) and each replicated final combined vector is decoded to generate a forecast at a different time point.

**9.** The method according to any preceding claim, wherein the forecast neural network and/or each adjacent location neural network is a Bidirectional long short term memory, BiLSTM, neural networks (610, 615a-615g).

**10.** The method according to any preceding claim, wherein the dataset is data from a telecommunications network, preferably a 5G network and further preferably wherein the dataset comprises one or more of: a cellular site identifier, CellID; Date-time; incoming SMS count, SmsIn; outgoing SMS count, SmsOut; incoming call count, CallIn; outgoing call count, CallOut, and internet activity, internet; and optionally wherein the dataset further comprises: a day of the observation; time of the day; an indicator variable whether its a working hour; a holiday indicator; a weekday indicator, and a further cell ID.

**11.** A computer program which, when run on a computer, causes the computer to carry out a method for training a telecommunications neural network to forecast multivariate data in a forecast location in a network comprising:

inputting a dataset from the forecast location and one or more adjacent locations, the dataset comprising spatio-temporal characteristics of each location and multivariate data recorded at each location;
determining a longest time-series sequence length of the dataset for which an occurrence frequency of the longest time series sequence length appearing in the dataset is higher than a threshold number of the dataset, a time-series sequence length indicating a total length of consecutive time steps with complete data in the dataset;
training a forecast location neural network based on the determined longest time-series sequence length to encode the multivariate data from the forecast location into a forecast location vector;
training for each of the one or more adjacent locations an adjacent location neural network based on the determined longest time-series sequence length to encode the multivariate data from each of the one or more adjacent locations each into an adjacent location vector;
combining the one or more adjacent location vectors into a combined adjacent location vector;
composing the forecast location vector and combined adjacent location vector into a final combined vector;
decoding the final combined vector to generate a forecast from the dataset for the forecast location.

**12.** An information processing apparatus for training a neural network to forecast multivariate data in a forecast location in a telecommunications network comprising a memory (1304) and a processor (1303) connected to the memory (1304), wherein the processor (1303) is configured to:

input a dataset from the forecast location and one or more adjacent locations, the dataset comprising spatio-temporal characteristics of each location and multivariate data recorded at each location;
determine a longest time-series sequence length of the dataset for which an occurrence frequency of the longest time-series sequence length appearing in the dataset is higher than a threshold number of the dataset, a time-series sequence length indicating a total length of consecutive time steps with complete data in the dataset;
train a forecast location neural network based on the determined longest time-series sequence length to encode the multivariate data from the forecast location into a forecast location vector;
train for each of the one or more adjacent locations an adjacent location neural network based on the determined longest time-series sequence length to encode the multivariate data from each of the one or more adjacent locations each into an adjacent location vector;
combine the one or more adjacent location vectors into a combined adjacent location vector;
compose the forecast location vector and combined adjacent location vector into a final combined vector;
decode the final combined vector to generate a forecast from the dataset for the forecast location.

**13.** A computer-implemented method for forecasting multivariate data in a forecast location in a telecommunications network comprising:

inputting a dataset from the forecast location and one or more adjacent locations, the dataset comprising spatio-temporal characteristics of each location and multivariate data recorded at each location;
providing a longest time-series sequence length of the dataset for which an occurrence frequency of the longest time-series sequence length appearing in the dataset is higher than a threshold number of the dataset, a time-series sequence length indicating a total length of consecutive time steps with complete data in the dataset;
using a pretrained forecast location neural network based on the longest time-series sequence length to encode the multivariate data from the forecast location into a forecast location vector;
using for each of the one or more adjacent locations a pretrained adjacent location neural network based on the longest time-series sequence length to encode the multivariate data from each of the one or more adjacent locations each into an adjacent location vector;
combining the one or more adjacent location vectors into a combined adjacent location vector;
composing the forecast location vector and combined adjacent location vector into a final combined vector;
decoding the final combined vector to generate a forecast from the dataset for the forecast location.

**14.** The method according to claim 13, wherein the dataset is data from a telecommunications network, preferably a 5G network, and further preferably wherein the dataset comprises one or more of: a cellular site identifier, CellID; Date-time; incoming SMS count, SmsIn; outgoing SMS count, SmsOut; incoming call count, CallIn; outgoing call count, CallOut, and internet activity, internet; and optionally wherein the dataset further comprises one or more of: a day of the observation; time of the day; an indicator variable whether its a working hour; a holiday indicator; a weekday indicator, and a further cell ID, and

wherein the forecast is used to activate/deactivate network resources and
preferably wherein when the forecast shows higher network demand, more network resources are made available to handle extra load; and
when the forecast shows a lower network demand, network resources are taken offline.

**15.** The method according to claim 13 or 14, wherein the generated forecast is output on a graphical user interface, and preferably wherein the forecast is output as a forecast map.

## Patentansprüche

**1.** Computerimplementiertes Verfahren zum Trainieren eines neuronalen Netzwerks zur Vorhersage multivariater Daten an einem Vorhersageort in einem Telekommunikationsnetzwerk, umfassend:

Eingeben eines Datensatzes von dem Vorhersageort und einem oder mehreren benachbarten Orten, wobei der Datensatz raumzeitliche Charakteristika jedes Ortes und an jedem Ort aufgezeichnete multivariate Daten umfasst;
Bestimmen einer längsten Zeitreihen-Sequenzlänge des Datensatzes, für die eine Auftrittshäufigkeit der längsten Zeitreihen-Sequenzlänge, die in dem Datensatz auftritt, höher ist als eine Schwellenwertanzahl des Datensatzes, wobei eine Zeitreihen-Sequenzlänge eine Gesamtlänge aufeinanderfolgender Zeitschritte mit vollständigen Daten in dem Datensatz angibt;
Trainieren eines Vorhersageort-neuronalen Netzwerks basierend auf der bestimmten längsten Zeitreihen-Sequenzlänge, um die multivariaten Daten von dem Vorhersageort in einen Vorhersageort-Vektor zu codieren;
Trainieren, für jeden des einen oder der mehreren benachbarten Orte, eines Benachbarter-Ort-neuronalen Netzwerks basierend auf der bestimmten längsten Zeitreihen-Sequenzlänge, um die multivariaten Daten von jedem des einen oder der mehreren benachbarten Orte jeweils in einen Benachbarter-Ort-Vektor zu codieren;
Kombinieren des einen oder der mehreren Benachbarter-Ort-Vektoren zu einem kombinierten Benachbarter-Ort-Vektor;
Zusammensetzen des Vorhersageort-Vektors und des kombinierten Benachbarter-Ort-Vektors zu einem finalen kombinierten Vektor;
Decodieren des finalen kombinierten Vektors, um eine Vorhersage aus dem Datensatz für den Vorhersageort zu erzeugen.

**2.** Verfahren nach einem der vorhergehenden Ansprüche, wobei das Verfahren ferner umfasst:

Bestimmen einer oder mehrerer kürzerer Zeitreihen-Sequenzlängen des Datensatzes in Bezug auf die längste Zeitreihen-Sequenzlänge;
Wiederholen, für die eine oder mehreren kürzeren Zeitreihenlängen, der Schritte des Trainierens des Vorhersageort-neuronalen Netzwerks und des einen oder der mehreren Benachbarter-Ort-neuronalen Netzwerke, des Kombinierens zu einem kombinierten Benachbarter-Ort-Vektor, des Zusammensetzens zu einem finalen kombinierten Vektor, des Decodierens zum Erzeugen einer Vorhersage; und
sobald die neuronalen Netzwerke trainiert sind, Bestimmen eines Ensembles der erzeugten Vorhersagen für jede der längsten Zeitreihen-Sequenzlänge und der einen oder mehreren kürzeren Zeitreihenlängen, um eine finale Vorhersage für den Vorhersageort zu erzeugen.

**3.** Verfahren nach einem der vorhergehenden Ansprüche, wobei das Netzwerk eine Vielzahl von benachbarten Orten umfasst, und wobei das Kombinieren eines oder mehrerer Benachbarter-Ort-Vektoren zu einem kombinierten Benachbarter-Ort-Vektor umfasst:

Konkatenieren der Benachbarter-Ort-Vektoren zu einem konkatenierten Ortsvektor; und
Eingeben des konkatenierten Ortsvektors in eine Sequenz von zwei Multilayer-Perzeptron-Schichten, wobei die Ausgabe einer ersten Multilayer-Perzeptron-Schicht in eine zweite Multilayer-Perzeptron-Schicht eingegeben wird.

**4.** Verfahren nach einem der vorhergehenden Ansprüche, wobei das Zusammensetzen des Vorhersageort-Vektors und des kombinierten Benachbarter-Ort-Vektors zu dem finalen kombinierten Vektor umfasst:
Konkatenieren des Vorhersageort-Vektors und der kombinierten Benachbarter-Ort-Vektoren zu einem finalen latenten Vektor.

**5.** Verfahren nach Anspruch 4, wobei das Zusammensetzen ferner umfasst:
Eingeben des finalen latenten Vektors in einen Selbstaufmerksamkeitsmechanismus (660a, 660b) und Bestimmen des finalen kombinierten Vektors als eine Ausgabe.

**6.** Verfahren nach einem der vorhergehenden Ansprüche, wobei das Decodieren des finalen kombinierten Vektors, um eine Vorhersage aus dem Datensatz für den Vorhersageort zu erzeugen, umfasst:

Trainieren eines Ausgabe-neuronalen Netzwerks basierend auf der bestimmten Zeitreihen-Sequenzlänge, um den finalen kombinierten Vektor zu codieren; und
Eingeben verborgener Schichten des trainierten Ausgabe-neuronalen Netzwerks in eine Time-Distributed-Dense-Schicht, um eine Ausgabe zu erzeugen, wobei die Ausgabe aus der Time-Distributed-Dense-Schicht die Vorhersage ist.

**7.** Verfahren nach einem der vorhergehenden Ansprüche, wobei die längste Zeitreihen-Sequenzlänge des Datensatzes unter Verwendung eines Algorithmus für längste gemeinsame kontinuierliche häufige Sequenzen, LCCFS, bestimmt wird, wobei der LCCFS-Algorithmus umfasst:

Bestimmen einer Anzahl von Datenaufzeichnungen in dem Datensatz mit vollständigen Daten, wobei eine Datenaufzeichnung an jedem Ort zu jedem Zeitschritt in dem Datensatz aufgezeichnete multivariate Daten umfasst;
Festlegen der Schwellenwertanzahl aus den vollständigen Daten in dem Datensatz, wobei die Schwellenwertanzahl vorzugsweise als 50 % der vollständigen Daten in dem Datensatz festgelegt wird;
Bestimmen von Länge und Auftrittshäufigkeit für jede kontinuierliche gemeinsame Sequenz in den multivariaten Daten, wobei die Länge eine Anzahl von vollständigen aufeinanderfolgenden multivariaten Daten in dem Datensatz ist und die Auftrittshäufigkeit eine Häufigkeit ist, mit der die kontinuierliche gemeinsame Sequenz in dem Datensatz auftritt;
Festlegen der kontinuierlichen gemeinsamen Sequenz in den multivariaten Daten mit einer Auftrittshäufigkeit über dem Schwellenwert als die längste Zeitreihen-Sequenzlänge.

**8.** Verfahren nach einem der vorhergehenden Ansprüche, wobei der finale kombinierte Vektor unter Verwendung einer Vektorwiederholungseinheit (650) repliziert wird und jeder replizierte finale kombinierte Vektor decodiert wird, um eine Vorhersage zu einem anderen Zeitpunkt zu erzeugen.

**9.** Verfahren nach einem der vorhergehenden Ansprüche, wobei das Vorhersage-neuronale Netzwerk und/oder jedes Benachbarter-Ortneuronale Netzwerk ein bidirektionales Long-Short-Term-Memory-, BiLSTM-, neuronales Netzwerk (610, 615a-615g) ist.

**10.** Verfahren nach einem der vorhergehenden Ansprüche, wobei der Datensatz Daten aus einem Telekommunikationsnetzwerk, vorzugsweise einem 5G-Netzwerk, ist und wobei ferner vorzugsweise der Datensatz eines oder mehreres umfasst von: einem Mobilfunkstandort-Identifikator, CellID; Datum-Uhrzeit; Anzahl eingehender SMS, SmsIn; Anzahl ausgehender SMS, SmsOut; Anzahl eingehender Anrufe, CallIn; Anzahl ausgehender Anrufe, CallOut; und Internetaktivität, internet; und wobei optional der Datensatz ferner umfasst: einen Tag der Beobachtung; Tageszeit; eine Indikatorvariable, ob es sich um eine Arbeitsstunde handelt; einen Feiertagsindikator; einen Wochentagsindikator und eine weitere Zell-ID.

**11.** Computerprogramm, das, wenn es auf einem Computer ausgeführt wird, den Computer veranlasst, ein Verfahren zum Trainieren eines Telekommunikations-neuronalen Netzwerks zur Vorhersage multivariater Daten an einem Vorhersageort in einem Netzwerk auszuführen, umfassend:

Eingeben eines Datensatzes von dem Vorhersageort und einem oder mehreren benachbarten Orten, wobei der Datensatz raumzeitliche Charakteristika jedes Ortes und an jedem Ort aufgezeichnete multivariate Daten umfasst;
Bestimmen einer längsten Zeitreihen-Sequenzlänge des Datensatzes, für die eine Auftrittshäufigkeit der längsten Zeitreihen-Sequenzlänge, die in dem Datensatz auftritt, höher ist als eine Schwellenwertanzahl des Datensatzes, wobei eine Zeitreihen-Sequenzlänge eine Gesamtlänge aufeinanderfolgender Zeitschritte mit vollständigen Daten in dem Datensatz angibt;
Trainieren eines Vorhersageort-neuronalen Netzwerks basierend auf der bestimmten längsten Zeitreihen-Sequenzlänge, um die multivariaten Daten von dem Vorhersageort in einen Vorhersageort-Vektor zu codieren;
Trainieren, für jeden des einen oder der mehreren benachbarten Orte, eines Benachbarter-Ort-neuronalen Netzwerks basierend auf der bestimmten längsten Zeitreihen-Sequenzlänge, um die multivariaten Daten von jedem des einen oder der mehreren benachbarten Orte jeweils in einen Benachbarter-Ort-Vektor zu codieren;
Kombinieren des einen oder der mehreren Benachbarter-Ort-Vektoren zu einem kombinierten Benachbarter-Ort-Vektor;
Zusammensetzen des Vorhersageort-Vektors und des kombinierten Benachbarter-Ort-Vektors zu einem finalen kombinierten Vektor;
Decodieren des finalen kombinierten Vektors, um eine Vorhersage aus dem Datensatz für den Vorhersageort zu erzeugen.

**12.** Informationsverarbeitungsvorrichtung zum Trainieren eines neuronalen Netzwerks zur Vorhersage multivariater Daten an einem Vorhersageort in einem Telekommunikationsnetzwerk, umfassend einen Speicher (1304) und einen mit dem Speicher (1304) verbundenen Prozessor (1303), wobei der Prozessor (1303) konfiguriert ist zum:

Eingeben eines Datensatzes von dem Vorhersageort und einem oder mehreren benachbarten Orten, wobei der Datensatz raumzeitliche Charakteristika jedes Ortes und an jedem Ort aufgezeichnete multivariate Daten umfasst;
Bestimmen einer längsten Zeitreihen-Sequenzlänge des Datensatzes, für die eine Auftrittshäufigkeit der längsten Zeitreihen-Sequenzlänge, die in dem Datensatz auftritt, höher ist als eine Schwellenwertanzahl des Datensatzes, wobei eine Zeitreihen-Sequenzlänge eine Gesamtlänge aufeinanderfolgender Zeitschritte mit vollständigen Daten in dem Datensatz angibt;
Trainieren eines Vorhersageort-neuronalen Netzwerks basierend auf der bestimmten längsten Zeitreihen-Sequenzlänge, um die multivariaten Daten von dem Vorhersageort in einen Vorhersageort-Vektor zu codieren;
Trainieren, für jeden des einen oder der mehreren benachbarten Orte, eines Benachbarter-Ort-neuronalen Netzwerks basierend auf der bestimmten längsten Zeitreihen-Sequenzlänge, um die multivariaten Daten von jedem des einen oder der mehreren benachbarten Orte jeweils in einen Benachbarter-Ort-Vektor zu codieren;
Kombinieren des einen oder der mehreren Benachbarter-Ort-Vektoren zu einem kombinierten Benachbarter-Ort-Vektor;
Zusammensetzen des Vorhersageort-Vektors und des kombinierten Benachbarter-Ort-Vektors zu einem finalen kombinierten Vektor;
Decodieren des finalen kombinierten Vektors, um eine Vorhersage aus dem Datensatz für den Vorhersageort zu erzeugen.

**13.** Computerimplementiertes Verfahren zur Vorhersage multivariater Daten an einem Vorhersageort in einem Telekommunikationsnetzwerk, umfassend:

Eingeben eines Datensatzes von dem Vorhersageort und einem oder mehreren benachbarten Orten, wobei der Datensatz raumzeitliche Charakteristika jedes Ortes und an jedem Ort aufgezeichnete multivariate Daten umfasst;
Bereitstellen einer längsten Zeitreihen-Sequenzlänge des Datensatzes, für die eine Auftrittshäufigkeit der längsten Zeitreihen-Sequenzlänge, die in dem Datensatz auftritt, höher ist als eine Schwellenwertanzahl des Datensatzes, wobei eine Zeitreihen-Sequenzlänge eine Gesamtlänge aufeinanderfolgender Zeitschritte mit vollständigen Daten in dem Datensatz angibt;
Verwenden eines vortrainierten Vorhersageort-neuronalen Netzwerks basierend auf der längsten Zeitreihen-Sequenzlänge, um die multivariaten Daten von dem Vorhersageort in einen Vorhersageort-Vektor zu codieren;
Verwenden, für jeden des einen oder der mehreren benachbarten Orte, eines vortrainierten Benachbarter-Ort-neuronalen Netzwerks basierend auf der längsten Zeitreihen-Sequenzlänge, um die multivariaten Daten von jedem des einen oder der mehreren benachbarten Orte jeweils in einen Benachbarter-Ort-Vektor zu codieren;
Kombinieren des einen oder der mehreren Benachbarter-Ort-Vektoren zu einem kombinierten Benachbarter-Ort-Vektor;
Zusammensetzen des Vorhersageort-Vektors und des kombinierten Benachbarter-Ort-Vektors zu einem finalen kombinierten Vektor;
Decodieren des finalen kombinierten Vektors, um eine Vorhersage aus dem Datensatz für den Vorhersageort zu erzeugen.

**14.** Verfahren nach Anspruch 13, wobei der Datensatz Daten aus einem Telekommunikationsnetzwerk, vorzugsweise einem 5G-Netzwerk, ist und wobei ferner vorzugsweise der Datensatz eines oder mehreres umfasst von: einem Mobilfunkstandort-Identifikator, CellID; Datum-Uhrzeit; Anzahl eingehender SMS, SmsIn; Anzahl ausgehender SMS, SmsOut; Anzahl eingehender Anrufe, CallIn; Anzahl ausgehender Anrufe, CallOut; und Internetaktivität, internet; und wobei optional der Datensatz ferner eines oder mehreres umfasst von: einem Tag der Beobachtung; Tageszeit; einer Indikatorvariable, ob es sich um eine Arbeitsstunde handelt; einem Feiertagsindikator; einem Wochentagsindikator und einer weiteren Zell-ID, und

wobei die Vorhersage verwendet wird, um Netzwerkressourcen zu aktivieren/deaktivieren, und
wobei vorzugsweise, wenn die Vorhersage eine höhere Netzwerknachfrage zeigt, mehr Netzwerkressourcen zur Verfügung gestellt werden, um zusätzliche Last zu bewältigen; und
wenn die Vorhersage eine geringere Netzwerknachfrage zeigt, Netzwerkressourcen offline genommen werden.

**15.** Verfahren nach Anspruch 13 oder 14, wobei die erzeugte Vorhersage auf einer grafischen Benutzeroberfläche ausgegeben wird und wobei vorzugsweise die Vorhersage als eine Vorhersagekarte ausgegeben wird.

## Revendications

**1.** Procédé mis en œuvre par ordinateur d’entraînement d’un réseau neuronal pour la prévision de données à variables multiples à un emplacement prévisionnel dans un réseau de télécommunication comprenant :

la saisie d'un ensemble de données provenant de l'emplacement prévisionnel et d'un ou plusieurs emplacements adjacents, l'ensemble de données comprenant des caractéristiques spatio-temporelles de chaque emplacement et des données à variables multiples enregistrées à chaque emplacement ;
la détermination de la longueur de séquence de séries temporelles la plus longue de l'ensemble de données pour laquelle la fréquence d'occurrence de la longueur de séquence de séries temporelles la plus longue apparaissant dans l'ensemble de données est supérieure à un nombre seuil de l'ensemble de données, une longueur de séquence de séries temporelles indiquant une longueur totale d'étapes temporelles consécutives avec des données complètes dans l'ensemble de données ;
l'entraînement d'un réseau neuronal d'emplacement prévisionnel sur la base de la longueur de séquence de séries temporelles la plus longue déterminée pour encoder les données à variables multiples provenant de l'emplacement prévisionnel dans un vecteur d'emplacement prévisionnel ;
l'entraînement pour chacun des un ou plusieurs emplacements adjacents d'un réseau neuronal d'emplacement adjacent sur la base de la longueur de séquence de séries temporelles la plus longue déterminée pour encoder les données à variables multiples provenant de chacun des un plusieurs emplacements adjacents dans un vecteur d'emplacement adjacent ;
la combinaison des un ou plusieurs vecteurs d'emplacement adjacents en un vecteur d'emplacement adjacent combiné ;
la composition du vecteur d'emplacement prévisionnel et du vecteur d'emplacement adjacent combiné en un vecteur combiné final ;
le décodage du vecteur combiné final pour générer une prévision à partir de l'ensemble de données pour l'emplacement prévisionnel.

2. Procédé selon une quelconque revendication précédente, dans lequel le procédé comprend également :

la détermination d'une ou plusieurs longueurs de séquences de séries temporelles plus courtes de l'ensemble de données par rapport à la longueur de séquence de séries temporelles la plus longue ;
la répétition, pour les une ou plusieurs longueurs de séries temporelles plus courtes, des étapes d'entraînement du réseau neuronal d'emplacement prévisionnel et des un ou plusieurs réseaux neuronaux d'emplacement adjacent, la combinaison en un vecteur d'emplacement adjacent combiné, la composition d'un vecteur combiné final, le décodage pour générer une prévision ; et
une fois les réseaux neuronaux entraînés, la détermination d'un ensemble de prévisions générées pour chacune des longueurs de séquence de séries temporelles les plus longues et des une ou plusieurs longueurs de séries temporelles plus courtes, afin de générer une prévision finale pour l'emplacement prévisionnel.

3. Procédé selon une quelconque revendication précédente, dans lequel le réseau comprend une pluralité d'emplacements adjacents, et dans lequel la combinaison d'un ou plusieurs vecteurs d'emplacement adjacent en un vecteur d'emplacement adjacent combiné comprend :

la concaténation des vecteurs d'emplacement adjacent en un vecteur d'emplacement concaténé ; et
la saisie du vecteur d'emplacement concaténé dans une séquence de deux couches de perceptron multicouche, la sortie d'une première couche de perceptron multicouche étant l'entrée dans une seconde couche de perceptron multicouche.

4. Procédé selon une quelconque revendication précédente, dans lequel la composition du vecteur d'emplacement prévisionnel et du vecteur d'emplacement adjacent combiné en un vecteur combiné final comprend :
la concaténation du vecteur d'emplacement prévisionnel et du vecteur d'emplacement adjacent combiné en un vecteur latent final.

5. Procédé selon la revendication 4, dans lequel la composition comprend également :
la saisie du vecteur latent final dans un mécanisme d'auto-attention (660a, 660b) et la détermination en sortie du vecteur combiné final.

6. Procédé selon une quelconque revendication précédente, dans lequel le décodage du vecteur combiné final pour générer une prévision à partir de l'ensemble de données pour l'emplacement prévisionnel comprend :

l'entraînement d'un réseau neuronal de sortie sur la base de la longueur de séquence de séries temporelles déterminée pour encoder le vecteur combiné final ; et
la saisie de couches cachées du réseau neuronal de sortie entraîné dans une couche dense distribuée dans le temps pour générer une sortie, dans lequel la sortie de la couche dense distribuée dans le temps est la prévision.

**7.** Procédé selon une quelconque revendication précédente, dans lequel la longueur de la séquence de séries temporelles la plus longue de l'ensemble de données est déterminée à l'aide d'un algorithme de séquences fréquentes continues communes les plus longues, LCCFS, l'algorithme LCCFS comprenant :

la détermination du nombre d'enregistrements de données dans l'ensemble de données comportant des données complètes, un enregistrement de données comprenant des données à variables multiples enregistrées à chaque emplacement à chaque étape temporelle dans l'ensemble de données ;
la définition du nombre seuil à partir des données complètes de l'ensemble de données, dans lequel le nombre seuil est de préférence fixé à 50 % des données complètes de l'ensemble de données ;
la détermination de la longueur et de la fréquence d'occurrence de chaque séquence commune continue dans les données à variables multiples, la longueur étant le nombre de données à variables multiples consécutives complètes dans l'ensemble de données et la fréquence d'occurrence étant le nombre de fois où la séquence commune continue apparaît dans l'ensemble de données ;
la définition de la séquence commune continue dans les données à variables multiples avec une fréquence d'occurrence supérieure à la valeur seuil comme la longueur de séquence de séries temporelles la plus longue.

**8.** Procédé selon une quelconque revendication précédente, dans lequel le vecteur combiné final est répliqué à l'aide d'une unité de vecteur répétitif (650) et chaque vecteur combiné final répliqué est décodé pour générer une prévision à un moment différent.

**9.** Procédé selon une quelconque revendication précédente, dans lequel le réseau neuronal de prévision et/ou chaque réseau neuronal d'emplacement adjacent est un réseau neuronal à mémoire à court terme bidirectionnelle (BiLSTM) (610, 615a-615g).

**10.** Procédé selon une quelconque revendication précédente, dans lequel l'ensemble de données est constitué de données provenant d'un réseau de télécommunication, de préférence un réseau 5G, et également de préférence dans lequel l'ensemble de données comprend un ou plusieurs des éléments suivants : un identifiant de site cellulaire (CellID) ; une date et une heure ; un nombre de SMS entrants (SmsIn) ; un nombre de SMS sortants (SmsOut) ; un nombre d'appels entrants (CallIn) ; un nombre d'appels sortants (CallOut) et une activité Internet (internet) ; et, de manière optionnelle, dans lequel l'ensemble de données comprend également : un jour de l'observation ; une heure de la journée ; une variable indicatrice précisant s'il s'agit d'une heure ouvrable ; un indicateur de jour férié ; un indicateur de jour de la semaine et un autre identifiant de cellule.

**11.** Programme informatique qui, lorsqu'il est exécuté sur un ordinateur, amène l'ordinateur à réaliser un procédé d'entraînement d'un réseau neuronal de télécommunication pour la prévision de données à variables multiples à un emplacement prévisionnel dans un réseau comprenant :

la saisie d'un ensemble de données provenant de l'emplacement prévisionnel et d'un ou plusieurs emplacements adjacents, l'ensemble de données comprenant des caractéristiques spatio-temporelles de chaque emplacement et des données à variables multiples enregistrées à chaque emplacement ;
la détermination de la longueur de séquence de séries temporelles la plus longue de l'ensemble de données pour laquelle la fréquence d'occurrence de la longueur de séquence de séries temporelles la plus longue apparaissant dans l'ensemble de données est supérieure à un nombre seuil de l'ensemble de données, une longueur de séquence de séries temporelles indiquant une longueur totale d'étapes temporelles consécutives avec des données complètes dans l'ensemble de données ;
l'entraînement d'un réseau neuronal d'emplacement prévisionnel sur la base de la longueur de séquence de séries temporelles la plus longue déterminée pour encoder les données à variables multiples provenant de l'emplacement prévisionnel dans un vecteur d'emplacement prévisionnel ;
l'entraînement pour chacun des un ou plusieurs emplacements adjacents d'un réseau neuronal d'emplacement adjacent sur la base de la longueur de séquence de séries temporelles la plus longue déterminée pour encoder les données à variables multiples provenant de chacun des un plusieurs emplacements adjacents dans un vecteur d'emplacement adjacent ;
la combinaison des un ou plusieurs vecteurs d'emplacement adjacents en un vecteur d'emplacement adjacent combiné ;
la composition du vecteur d'emplacement prévisionnel et du vecteur d'emplacement adjacent combiné en un vecteur combiné final ;

le décodage du vecteur combiné final pour générer une prévision à partir de l'ensemble de données pour l'emplacement prévisionnel.

**12.** Appareil de traitement d'informations destiné à entraîner un réseau neuronal à prévoir des données à variables multiples dans un emplacement prévisionnel dans un réseau de télécommunication, comprenant une mémoire (1304) et un processeur (1303) connecté à la mémoire (1304), dans lequel le processeur (1303) est configuré pour :

saisir un ensemble de données provenant de l'emplacement prévisionnel et d'un ou plusieurs emplacements adjacents, l'ensemble de données comprenant des caractéristiques spatio-temporelles de chaque emplacement et des données à variables multiples enregistrées à chaque emplacement ;
déterminer la longueur de séquence de séries temporelles la plus longue de l'ensemble de données pour laquelle la fréquence d'occurrence de la longueur de séquence de séries temporelles la plus longue apparaissant dans l'ensemble de données est supérieure à un nombre seuil de l'ensemble de données, une longueur de séquence de séries temporelles indiquant une longueur totale d'étapes temporelles consécutives avec des données complètes dans l'ensemble de données ;
entraîner un réseau neuronal d'emplacement prévisionnel sur la base de la longueur de séquence de séries temporelles la plus longue déterminée pour encoder les données à variables multiples provenant de l'emplacement prévisionnel dans un vecteur d'emplacement prévisionnel ;
entraîner pour chacun des un ou plusieurs emplacements adjacents un réseau neuronal d'emplacement adjacent sur la base de la longueur de séquence de séries temporelles la plus longue déterminée pour encoder les données à variables multiples provenant de chacun des un plusieurs emplacements adjacents dans un vecteur d'emplacement adjacent ;
combiner les un ou plusieurs vecteurs d'emplacement adjacents en un vecteur d'emplacement adjacent combiné ;
composer le vecteur d'emplacement prévisionnel et le vecteur d'emplacement adjacent combiné en un vecteur combiné final ;
décoder le vecteur combiné final pour générer une prévision à partir de l'ensemble de données pour l'emplacement prévisionnel.

**13.** Procédé mis en œuvre par ordinateur pour la prévision de données à variables multiples à un emplacement prévisionnel dans un réseau de télécommunication comprenant :

la saisie d'un ensemble de données provenant de l'emplacement prévisionnel et d'un ou plusieurs emplacements adjacents, l'ensemble de données comprenant des caractéristiques spatio-temporelles de chaque emplacement et des données à variables multiples enregistrées à chaque emplacement ;
la fourniture de la longueur de séquence de séries temporelles la plus longue de l'ensemble de données pour laquelle la fréquence d'occurrence de la longueur de séquence de séries temporelles la plus longue apparaissant dans l'ensemble de données est supérieure à un nombre seuil de l'ensemble de données, une longueur de séquence de séries temporelles indiquant une longueur totale d'étapes temporelles consécutives avec des données complètes dans l'ensemble de données ;
l'utilisation d'un réseau neuronal d'emplacement prévisionnel préentraîné sur la base de la longueur de séquence de séries temporelles la plus longue pour encoder les données à variables multiples provenant de l'emplacement prévisionnel dans un vecteur d'emplacement prévisionnel ;
l'utilisation pour chacun des un ou plusieurs emplacements adjacents d'un réseau neuronal d'emplacement adjacent préentraîné sur la base de la longueur de séquence de séries temporelles la plus longue pour encoder les données à variables multiples provenant de chacun des un plusieurs emplacements adjacents dans un vecteur d'emplacement adjacent ;
la combinaison des un ou plusieurs vecteurs d'emplacement adjacents en un vecteur d'emplacement adjacent combiné ;
la composition du vecteur d'emplacement prévisionnel et du vecteur d'emplacement adjacent combiné en un vecteur combiné final ;
le décodage du vecteur combiné final pour générer une prévision à partir de l'ensemble de données pour l'emplacement prévisionnel.

**14.** Procédé selon la revendication 13, dans lequel l'ensemble de données est constitué de données provenant d'un réseau de télécommunication, de préférence un réseau 5G, et également de préférence dans lequel l'ensemble de données comprend un ou plusieurs des éléments suivants : un identifiant de site cellulaire (CellID) ; une date et une heure ; un nombre de SMS entrants (SmsIn) ; un nombre de SMS sortants (SmsOut) ; un nombre d'appels entrants (CallIn) ; un nombre d'appels sortants (CallOut) et une activité Internet (internet) ; et, de manière optionnelle, dans lequel l'ensemble de données comprend également un ou plusieurs éléments parmi : un jour de l'observation ; une heure de la journée ; une variable indicatrice précisant s'il s'agit d'une heure ouvrable ; un indicateur de jour férié ; un indicateur de jour de la semaine et un autre identifiant de cellule, et

dans lequel la prévision est utilisée pour activer/désactiver des ressources du réseau et
de préférence dans lequel, lorsque la prévision indique une demande sur le réseau plus élevée, davantage de ressources réseau sont mises à disposition pour gérer la charge supplémentaire ; et
lorsque la prévision indique une demande sur le réseau plus faible, des ressources réseau sont mises hors service.

**15.** Procédé selon la revendication 13 ou 14, dans lequel la prévision générée est affichée sur une interface utilisateur graphique, et de préférence dans lequel la prévision est affichée sous forme de carte de prévision.

Previous method 1
110
100
index date time CellID smsin smsout callin callout internet pod day Is holiday isweekday count sample
0 21-11-2019 04:00 1 0.066321 0.05375 0.089092 8.369939 4 21 0 0 5 invalid
1 21-11-2019 05:00 1 0.158596 0.162162 0.020341 6.95087 5 21 0 0 5 invalid
2 21-11-2019 06:00 1 0.033253 0.001787 0.026137 6.571213 6 21 0 0 5 invalid
3 21-11-2019 07:00 1 0.062538 0.014544 0.01575 0.013962 7 21 0 0 5 invalid
4 21-11-2019 08:00 1 0.027509 0.026913 0.912129 6.049259 8 21 0 0 4 invalid
5 21-11-2019 09:00 1 0.027017 0.026875 0.001787 0.026137 5.29512 9 21 0 0 5 valid
Multi-Variate
Multi-Step
Spatiotemporal
5G Time-Series
Recorded Data
With up to 35% missing data
1
Input Data
Data imputation techniques are utilized in step 2 to fill in missing data and these data imputations are not the best proxy for missing data and add noisy information to the existing data
Unsupervised Data Imputation Techniques
1. Last Valid Observation
2. Next Valid Observation
3. Interpolation
4. Mean
5. Median
6. Mode
2
Missing data generated using the imputation techniques
Data Imputation Performance Average-MAE by taking 10 samples of size 1000each
Mean Absolute Error
0.14
0.12
0.1
0.08
0.06
0.04
0.02
0
5%
10%
15%
20%
25%
30%
35%
Last Valid Observation
Next Valid Observation
Interpolation
Mean
Median
Mode
120
Related art
Complete data with all missing value (but Noisy entry added due to imputation techniques)
3
Added Noises
Multi-variate, Multi-Step Time series forecasting models
4
Poor performance
Issues


FIG. 1

Previous method 2

| index | datetime | CellID | smsin | smsout | callin | callout | Internet | pod | day | isholiday | Isweekday | count | sample |
|---|---|---|---|---|---|---|---|---|---|---|---|---|---|
| 0 | 21-11-2019 04:00 | 1 | | 0.066321 | 0.05375 | 0.089092 | 8.369939 | 4 | 21 | 0 | 0 | 5 | invalid |
| 1 | 21-11-2019 05:00 | 1 | 0.158596 | 0.162162 | 0.020341 | | 6.95087 | 5 | 21 | 0 | 0 | 5 | invalid |
| 2 | 21-11-2019 06:00 | 1 | 0.033253 | | 0.001787 | 0.026137 | 6.571213 | 6 | 21 | 0 | 0 | 5 | invalid |
| 3 | 21-11-2019 07:00 | 1 | 0.062538 | 0.014544 | 0.01575 | 0.013962 | | 7 | 21 | 0 | 0 | 5 | invalid |
| 4 | 21-11-2019 08:00 | 1 | 0.027509 | 0.026913 | 0.912129 | | 6.049259 | 8 | 21 | 0 | 0 | 4 | invalid |
| 5 | 21-11-2019 09:00 | 1 | 0.027017 | 0.026875 | 0.001787 | 0.026137 | 5.29512 | 9 | 21 | 0 | 0 | 5 | valid |

200
Input Data
Multi-Variate Multi-Step Spatiotemporal 5G Time-Series Recorded Data With up to 35% missing data
2
Data imputation techniques are utilized to fill in missing data and incorporate newly acquired data resulting from these techniques.
Missing data generated using the imputation techniques
Supervised Data Imputation Techniques
1. GAIN:
2. Conv-GAIN:
3
Labelled Training data
1
Need labelled training data to train the system, which tough to prepare several times
Data Imputation Performance Average-MAE by taking 10 samples of size 1000 each
Mean Absolute Error
0.06
0.05
0.04
0.03
0.02
0.01
0
5%
10%
15%
20%
25%
30%
35%
GAIN
ConvGAIN
Related art
Complete data with all missing value (but Noisy entry added due to imputation techniques)
4
Added Noises
Issues
Multi-variate, Multi-Step Time series forecasting models
5
Poor performance

FIG. 2

300
305
Previous method 3
$t_0$
$t_1$
$t_{...}$
$t_{22}$
$t_{23}$
Inputs
Model
$t_{24}$
$t_{25}$
$t_{...}$
$t_{46}$
$t_{47}$
Predictions
Single-Shot LSTM Network
310
$t_0$
$t_1$
$t_{...}$
$t_{22}$
$t_{23}$
Inputs
Model
Warmup
$t_{24}$
$t_{25}$
$t_{...}$
$t_{46}$
$t_{47}$
Predictions
Auto-regressive LSTM Network
Related art

FIG. 3

400
inputting a dataset from the forecast location and one or more adjacent locations, the dataset comprising spatio-temporal characteristics of each location and multivariate data recorded at each location
S10
determining a longest time-series sequence length of the dataset for which an occurrence frequency of the longest time-series sequence length appearing in the dataset is higher than a threshold number of the dataset, a time-series sequence length indicating a total length of consecutive time steps with complete data in the dataset
S20
training a forecast location neural network based on the determined longest time series sequence length to encode the multivariate data from the forecast location into a forecast location vector
S30
training for each of the one or more adjacent locations an adjacent location neural network based on the determined longest time series sequence length to encode the multivariate data from each of the one or more adjacent locations each into an adjacent location vector
S40
combining the one or more adjacent location vectors into a combined adjacent location vector
S50
composing the forecast location vector and combined adjacent location vector into a final combined vector
S60
decoding the final combined vector to generate a forecast from the dataset for the forecast location
S70

FIG. 4

500
determining a number of data records in the dataset with complete data, a data record comprising multivariate data recorded at each location at each time step in the dataset
S100
setting the threshold number from the complete data in the dataset, wherein the threshold number is preferably set as 50% of the complete data in the dataset;
S110
determining length and occurrence frequency for each continuous common sequence in the multivariate data, the length being a number of complete consecutive multivariate data in the dataset and the occurrence frequency being a number of times the continuous common sequence occurs in the dataset;
S120
setting the continuous common sequence in the multivariate data with an occurrence frequency above the threshold value as the longest time-series sequence length.
S130

FIG. 5

Detailed Process flow
(Background deep learning architecture, used to capture – Spatial, Temporal and Multi-Variante relation)
600
$C_n$
LSTM
610
Input: Central grid with a backstage 'τ' time instances and 'K – 5 features, i.e., (b X ( τX (K+5))
$C_1$
$C_2$
$C_3$
$C_4$
$C_5$
$C_6$
$C_7$
$C_8$
615a
615b
615c
615d
615e
615f
615g
615h
Input: 8 Adjacent Grids (denoted as C-1, to C-8), each of them with 'b' batch-size, 't' time instances, and 'K' features, i.e., (b X τX K))
Bi-Directional LSTM with Last Hidden Layer's Output
Last Hidden Layer's Output
Concatenation Layer
620
DNN1
DNN2
630
635
Concatenation Layer
640
650
Repeat Vector
660b
Self-Attention
660a
670a
670b
Bidirectional LSTM Layer: Considering outputs of each of the LSTM blocks
680a
680b
DNN-F0
DNN-F1
DNN-Fk
Outputs
Time Distributed Wrapper using DNN for feature level prediction at time (t+2) for $C_0$
Time Distributed Wrapper using DNN for feature level prediction at time (t+1) for $C_0$
C1 C2 C3
C4 C0 C4
C7 C6 C5
C1
C2
C3
C4
C5
C6
C7
C8
C0
Collecting Spatial and Temporal relations of adjacent grids through Shallow Graph - achieved by using Bi-Directional LSTM


FIG. 6

700
750a
750b
CDR prediction of C0 at time t+1
CDR prediction of C0 at time t+2
740
Decoder unit
730
Self-Attention layer
720
Concatenation layer
710
715
Encoder Unit 1
Encoder Unit 2
705a
705b
Input features & CDR at time t of C0
Input features & CDR at time t of C0

FIG. 7

800
Central Cell C0 with adjacent cells C1-C8
1 2 3
4 5 6
7 8 9
805
C1 C2 C3
C4 C0 C4
C7 C6 C5
C0
Input to the forecasting model. The input to the forecasting model consists of features from the central cell C0 and features from adjacent cells C1-C8.
810a
Model-1
Input - time stamp length =5
Output - time stamp length =2
810b
Model-2
Input - time stamp length =4
Output - time stamp length =2
810c
Model-3
Input - time stamp length =3
Output - time stamp length =2
Models 1,2 and 3 architecture.
Weighted Average
Ensemble Model-1 (0.58)
Model-2 (0.29)
Model-3 (0.13)
815

FIG. 8

900
Training
Start
S910
Dataset input
S920
Dataset-preprocessing:
processing data into an Input 1, Input 2 and Input 3
Training Model 1: Background model, works for Input 1
Training Model 2: Background model, works for Input 2
Training Model 3: Background model, works for Input 3
S930
S940
Weighted Average Ensemble System
S950
1. Trained Model-1, 2. Trained model-2, and 3. Trained Model-3 (with Ensemble Weights)
End

FIG. 9

1000
Testing
Start
S1010
input the Test data and provide time series sequence
S1020
1. Trained model 1, 2. Trained model 2 and 3. Trained model 3 (with ensemble weights)
S1030
Forecast the Multivariate values for the given time-steps, for all the grids (spatial units)
End

FIG. 10

1100
1125
1115
Predicted internet usage at 3am
Predicted voice calls usage at 3am
Predicted text message usage at 3am
1105
20k
15k
10k
5k
0
600
500
400
300
200
100
0
Predicted internet usage at 8pm
Predicted voice calls usage at 8pm
Predicted text message usage at 8pm
1110
1120
1130

FIG. 11

1240
5G Time Series Forecasting
Date:
Pick one of the dates.
1205
November, 25
Time (24Hrs):
Select time of the day selected from the dropdown below.
1210
20:00:00
Feature:
1215
Internet
Calls Incoming
Calls Outgoing
Text Incoming
Text Outgoing
SUBMIT
Calls Incoming Usage for Milan City
Cell ID: 7408
Lat: 45.411322
Long: 9.032584
Internet: 1298
Calls Incoming: 175
Calls Outgoing: 188
Text Incoming: 79
Text Outgoing: 78
0
Data Record of Calls Incoming
600
500
400
300
200
100
0
1200
1220
1235
1225
1230
1245

FIG. 12

1300
PROCESSOR
1303
MEMORY
1304
1302
1305
DISPLAY
1306
INPUT
1307
NETWORK I/F

FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2021326723 A1


### Non-patent literature cited in the description


- **G. BARLACCHI** ; **M. DE NADAI** ; **R. LARCHER** ; **A. CASELLA** ; **C. CHITIC** ; **G. TORRISI** ; **F. ANTONELLI** ; **A. VESPIGNANI** ; **A. PENTLAND** ; **B. LEPRI**. A multi-source dataset of urban life in the city of milan and the province of trentino. *Scientific data*, 2015, vol. 2 (1), 1-15
- Gain: Missing data imputation using generative adversarial nets. **YOON, J.** ; **JORDON, J.** ; **SCHAAR, M.** International conference on machine learning. PMLR, July 2018, 5689-5698
- **ADELI, E.** ; **ZHANG, J.** ; **TAFLANIDIS, A.A.** Convolutional generative adversarial imputation networks for spatio-temporal missing data in storm surge simulations. *arXiv preprint arXiv:2111.02823*, 2021
- **T. P. OLIVEIRA** ; **J. S. BARBAR** ; **A. S. SOARES**. Computer network traffic prediction: a comparison between traditional and deep learning neural networks. *International Journal of Big Data Intelligence*, 2016, vol. 3 (1), 28-37
- Spatiotemporal 13odelling and prediction in cellular networks: A big data enabled deep learning approach. **J. WANG** ; **J. TANG** ; **Z. XU** ; **Y. WANG** ; **G. XUE** ; **X. ZHANG** ; **D. YANG**. IEEE INFOCOM 2017-IEEE conference on computer communications.. IEEE, 2017, 1-9
- **C. ZHANG** ; **H. ZHANG** ; **D. YUAN** ; **M. ZHANG**. Citywide cellular traffic prediction based on densely connected convolutional neural networks. *IEEE Communications Letters*, 2018, vol. 22 (8), 1656-1659
- **J. LIN** ; **Y. CHEN** ; **H. ZHENG** ; **M. DING** ; **P. CHENG** ; **L. HANZO**. A datadriven base station sleeping strategy based on traffic prediction. *IEEE Transactions on Network Science and Engineering*, 2021
- Accurate loadprediction algorithms assisted with machine learning for network traffic. **Y. GAO** ; **M. ZHANG** ; **J. CHEN** ; **J. HAN** ; **D. LI** ; **R. QIU**. 2021 International Wireless Communications and Mobile Computing (IWCMC).. IEEE, 2021, 1683-1688
- **K. HE** ; **X. ZHANG** ; **S. REN** ; **J. SUN**. Deep residual learning for image recognition. *Proceedings of the IEEE conference on computer vision and pattern recognition*, 2016, 770-778
- **D. PEDAMONTI**. Comparison of non-linear activation functions for deep neural networks on mnist classification task. *arXiv preprint arXiv:1804.02763*, 2018
- **A. VASWANI** ; **N. SHAZEER** ; **N. PARMAR** ; **J. USZKOREIT** ; **L. JONES** ; **A. N. GOMEZ** ; **L. KAISER** ; **I. POLOSUKHIN**. Attention is all you need. *Advances in neural information processing systems*, 2017, vol. 30
- **T. CHAI** ; **R. R. DRAXLER**. Root mean square error (rmse) or mean absolute error (mae)?-arguments against avoiding rmse in the literature. *Geoscientific model development*, 2014, vol. 7 (3), 1247-1250
- **C. ZHANG** ; **H. ZHANG** ; **D. YUAN** ; **M. ZHANG**. Citywide cellular traffic Prediction based on densely connected convolutional neural networks. *IEEE Communications Letters*, 2018, vol. 22 (8), 1656-1659
- Ai-based traffic forecasting in 5g network. **M. MOHSENI** ; **S. NIKAN** ; **A. SHAMI**. 2022 IEEE Canadian Conference on Electrical and Computer Engineering (CCECE).. IEEE, 2022, 188-192
- AI-based Traffic Forecasting in 5G network. **MOHSENI, M.** ; **NIKAN, S.** ; **SHAMI, A.** 2022 IEEE Canadian Conference on Electrical and Computer Engineering (CCECE). IEEE, September 2022, 188-192